# EUROPÄISCHE PATENTSCHRIFT

(11) **EP 1 327 094 B1**
(45) Veröffentlichungstag und Bekanntmachung des Hinweises auf die Patenterteilung: **18.01.2006**
(21) Anmeldenummer: 01988833.8
(22) Anmeldetag: 11.10.2001
(51) Int. Cl.: F16K 31/00, F16K 31/06

(54) **STELLANTRIEB FÜR EIN VENTIL, INSBESONDERE EIN TURBINENVENTIL**
ACTUATOR FOR A VALVE, IN PARTICULAR A TURBINE VALVE
MECANISME DE COMMANDE POUR UNE SOUPAPE, EN PARTICULIER UNE SOUPAPE DE TURBINE

(30) Priorität: 20.10.2000 EP 00122837; 10.08.2001 EP 01119339
(43) Veröffentlichungstag der Anmeldung: 16.07.2003
(73) Patentinhaber: SIEMENS AKTIENGESELLSCHAFT, 80333 München (DE)
(72) Erfinder: STEINBORN, Richard, 51377 Leverkusen (DE)
(86) Internationale Anmeldenummer: PCT/EP2001/011799
(87) Internationale Veröffentlichungsnummer: WO 2002/035123

(56) Entgegenhaltungen:
- EP-A- 0 145 828
- DE-U- 29 801 229
- US-A- 3 017 157
- US-A- 3 778 027

## Beschreibung

Die Erfindung betrifft einen Stellantrieb für ein Ventil, insbesondere ein Turbinenventil, mit einer Ventilspindel zur Einstellung einer Öffnungsposition des Ventils und mit einem der Ventilspindel zugeordneten Antriebsteil.

Eine Turbine, insbesondere eine Dampfturbine, weist üblicherweise eine beträchtliche Anzahl von Ventilen auf, die beispielsweise als Frischdampf-, Abfang- oder Umleitventile sowie als Schnellschlussventile zum Einsatz kommen können. Die Öffnungsposition jedes dieser Ventile dient dabei zur Einstellung eines jeweiligen Material-, Gas- oder Dampfstroms und ist z.B. über eine dem jeweiligen Ventil zugeordnete Ventilspindel einstellbar. Eine solche Ventilspindel ist Bestandteil eines dem Ventil zugeordneten Stellantriebs. An den Stellantrieb können dabei, insbesondere im Hinblick auf Stellkraft und Stellgeschwindigkeit, sehr hohe Anforderungen gestellt werden. Für eine hohe Zuverlässigkeit des Ventils kann es beispielsweise erforderlich sein, dass der Stellantrieb eine Stellkraft von etwa 200 kN und eine Stellzeit von etwa 100 ms aufweist, dies insbesondere dann wenn eine Schnellschlussanforderung vorliegt.

Die Ventile sind daher üblicherweise als ölhydraulisch betriebene Stellventile ausgelegt, wobei die ihnen zugeordneten Stellantriebe jeweils eine ölhydraulische Einrichtung umfassen. Zum Betrieb der Stellantriebe und somit der Ventile kann beispielsweise ein zentrales hydraulisches Versorgungssystem vorgesehen sein. Für ein derartiges zentrales hydraulisches Versorgungssystem ist jedoch ein komplexes und somit aufwendiges Rohrleitungssystem erforderlich, das für eine hohe Betriebssicherheit auch redundant ausgeführt sein sollte. Zur Vereinfachung eines derartigen komplexen Versorgungssystems sind aus der Europäischen Patentanmeldung EP 0 040 732 A1 und aus dem Aufsatz W. Kindermann, E.G. Egener und H. Termühlen, "Compact Valve Actuator Control System for Large Steam Turbines", vorgetragen auf der American Power Conference, Chicago, 1984, Stellantriebe für Dampfturbinenventile bekannt, die jeweils ein dezentrales Hydrauliksystem aufweisen. Das Hydrauliksystem eines derartigen Stellantriebs ist zu einem an einem Ventilgehäuse angeordneten kompakten Antriebsblock integriert, so dass für eine Energieversorgung des Stellantriebs lediglich noch ein Kabelsystem erforderlich ist. Durch die Verwendung von Ö1 als Hydraulikflüssigkeit könnte es unter extrem ungünstigen Umständen zu einem Entzünden des Öls und somit zu einem Brand in der Dampfturbine kommen. Im Hinblick auf den Brandschutz können zwar als Hydraulikflüssigkeit auch schwer brennbare Flüssigkeiten eingesetzt werden. Derartige schwer brennbare Hydraulikflüssigkeiten sind jedoch kostspielig und erfordern aufgrund ihrer im Vergleich zu Hydraulikflüssigkeiten auf Mineralölbasis geringeren Stabilität verhältnismäßig aufwendige Pflegemaßnahmen.

In der DE-OS-1 937 198 ist ein Regelventil für die Regelung des Drucks und/oder der Menge von einem strömenden Medium in Kraftwerken, chemischen Anlagen oder dergleichen beschrieben. Das Regelventil weist eine Schubstange auf, an der ein Ventilsitz befestigt ist. Die Schubstange ist über einen um einen zentralen Drehpunkt drehbaren Balken mit einem elektrischen Servomotor gekoppelt. Dadurch ist die Menge des strömenden Mediums durch das Ventil hindurch einstellbar. An der Schubstange greift weiterhin eine Rückstellfeder an.

Die EP 0 230 849 A1 gibt ein Regelventil und ein Absperrventil an. Das Ventil weist einen entlang einer Achse verschieblichen Absperrkörper auf, der einen sich entlang der Achse erstreckenden Kolben aufweist. Der Kolben ist als geradverzahnte Zahnstange ausgeführt, welche mit einer Längsverzahnung eines weiteren Stabes in Kontakt steht. Durch eine Rotation dieses weiteren Stabes um seine Stabachse ist eine Verschiebung des Absperrkörpers in axialer Richtung erreichbar.

Eine Rotation dieses Stabes erfolgt mittels einer weiteren Verzahnung am Ende dieses Stabe über einen Elektromotor.

In der DE 44 46 605 A1 ist ein Ventil für eine Dampfturbine offenbart, welche eine Ventilspindel mit einem daran angeordneten Ventilkegel aufweist. Die Ventilspindel ist über einen Elektromotor angetrieben, welcher über eine elektromagnetisch betätigte Kupplung mit der Ventilspindel verbunden ist. Für einen automatischen Selbstschluss des Ventils umfasst dieses ein Tellerfedersystem. Die elektromagnetische Kupplung ist mit einer Gewindebuchse verbunden, welche mit einer drehfest geführten Ventilspindel zusammenarbeitet und so diese axial bewegt. Die Gewindebuchse ist als Kugelgewindebuchse ausgebildet, so dass sie spiel- und reibungsarm die Ventilspindel beaufschlagt. Aufgrund der drehfesten Führung der Ventilspindel, d. h. diese ist bei sich drehender Gewindebuchse lediglich axial auf- und abbewegbar, ist kein translatorisch wirksamer Antrieb erforderlich. Vielmehr genügt hierfür ein sich in zwei Richtungen drehender Elektromotor. Der Elektromotor muss allerdings über eine Drehmomentsicherung verfügen, um auf diese Weise zu verhindern, dass beispielsweise beim Schließen des Ventils der sich einendig an der Ventilspindel anschließende Ventilkegel sich beim Anlegen an den ihm zugeordneten Dichtsitz (Ventilsitz) keinen Schaden nimmt bzw. den Dichtsitz nicht beschädigt.

In der WO 98/13633 ist ein Stellantrieb für ein Ventil einer Turbine angegeben, dessen Öffnungsposition mittels einer Schubstange einstellbar ist, wobei bei besonders geringer Brandgefahr ein störungsfreier Betrieb des Ventils gewährleistet ist. Dazu ist zum Antrieb der Schubstange ein Elektromotor vorgesehen. Die Schubstange ist über ein Zahnrad-Zahnstangensystem und über eine elektromagnetische Zahnkupplung mit dem Elektromotor verbunden. Aus Gründen der Betriebssicherheit für den Stellantrieb und somit auch für das von diesem antreibbare Ventil ist in der WO 98/13633 weiterhin an der Schubstange ein Rückhaltefedersystem angeordnet.

Dieses umfasst eine Rückhaltefeder, die in einem Gehäuse angeordnet ist und auf eine an der Schubstange befestigte Druckplatte wirkt. Der Stellantrieb ist dabei derart ausgelegt, dass die Federkraft der Rückhaltefeder ein Schließen des Ventils bewirkt. Der Elektromotor wirkt für eine Öffnung des Ventils hierbei gegen die Federkraft der Rückhaltefeder.

Ein elektromechanischer Stellantrieb für ein Ventil, insbesondere für ein Dampfturbinenventil, ist in der WO 99/49250 angegeben. Der Stellantrieb weist eine Schubstange sowie einen Elektromotor zum Antrieb der Schubstange auf. Die Schubstange und der Elektromotor sind über eine Übertragungsvorrichtung verbunden, durch welche Übertragungsvorrichtung je nach axialer Verschiebung der Schubstange ein sich änderndes Drehmoment erzeugbar ist. Die Schubstange ist mit einem Rückstellfedersystem verbunden. Dabei wird die Schubstange bereits in der Schließstellung des Ventils durch die Rückstellkraft des Rückstellfedersystems, welches als Ventiltellerfeder-Speicherpaket ausgeführt ist, belastet. Bei einer Öffnungsbewegung des Stellantriebs wird das Rückstellfedersystem weiter gespannt und erreicht in der Öffnungsstellung des Ventils seine maximale Rückstellkraft. Bei der Einstellung einer Öffnungsposition des Ventils muss mithin analog wie in der WO 98/13633 beschrieben, der Antrieb gegen die erhebliche Rückstellkraft des Rückstellfedersystems Arbeit verrichten.

In der DE 298 01 229 U1 wird eine Ventilstellvorrichtung offenbart, die einen Ventilsteller, eine Steuerung für den ventilsteller sowie einen Antrieb für den Ventilsteller aufweist. Der Antrieb des Ventilstellers bewegt einen Stößel, der im Normalbetrieb ein Ventil öffnet oder schließt. Dieses Schnellschlussventil weist zumindest eine Feder zum schnellen Verfahren des Stößels auf. Eine elektromagnetisch betätigte Kupplung ist vorgesehen, damit der Stößel im Normalbetrieb gegen die Fahrkraft gehalten wird.

Der Erfindung liegt daher die Aufgabe zugrunde, einen verbesserten Stellantrieb für ein Ventil, insbesondere für ein Turbinenventil, anzugeben, bei dem bei besonders geringer Brandgefahr ein störungsfreier und sicherer Betrieb des Ventils gewährleistet und die Einstellung einer Öffnungsposition des Ventils mit geringem Kraftaufwand möglich ist.

Diese Aufgabe wird erfindungsgemäß gelöst durch einen Stellantrieb für ein Ventil, insbesondere ein Turbinenventil, mit einer Ventilspindel zur Einstellung einer Öffnungsposition des Ventils und mit einem der Ventilspindel zugeordneten Antriebsteil, wobei der Antriebsteil mit der Ventilspindel über eine in einem Spannvorgang auf eine Vorspannung vorspannbare Speichereinrichtung so gekoppelt ist, dass bei vorgespannter Speichereinrichtung bei der Einstellung der Öffnungsposition die Vorspannung unverändert bleibt, wobei zur Beibehaltung der Vorspannung ein Einrastelement vorgesehen ist, welches beim Spannvorgang einrastet, wobei das Einrastelement eine biegsame, insbesondere federelastische, Zunge zum formschlüssigen Eingriff mit einer Einrastrampe aufweist.

Die Erfindung geht bereits von der Erkenntnis aus, dass in herkömmlichen Stellantrieben, die mit einem Sicherheits-Schnellschluss-System ausgestattet sind, die Einstellung einer Öffnungsposition des ventils mittels eines an das Ventil angekoppelten Stellantriebs, nur unter erheblichem Kraftaufwand möglich ist. Dies liegt daran, dass gegenüber der Rückstellkraft einer Feder, beispielsweise ein Ventiltellerfeder-Speicherpaket, Arbeit verrichtet werden muss. Bei einer Öffnungsbewegung des Stellantriebs wird die Feder gespannt und erreicht in der Öffnungsstellung des Ventils seine maximale Rückstellkraft. Dies erfordert eine entsprechende leistungsmäßige Auslegung des die Ventilspindel antreibenden Antriebsteils. Durch diese Art der starren Kopplung von Einstellvorgang und Spannvorgang der Feder für das Schnellschluss-System, ist bei einer regulären Änderung oder Einstellung der Öffnungsposition des Ventils stets eine im Allgemeinen sehr große, sich ändernde Kraft auf die Ventilspindel aufzubringen. Die erforderliche Einstellkraft nimmt dabei z. B. beim Öffnen kontinuierlich zu und beim Schließen entsprechend der Federcharakteristik kontinuierlich ab Hinzu kommt, dass beim Halten einer Öffnungsposition, z.B. bei vollständig geöffnetem Ventil, die (maximale) Rückstellkraft durch zusätzliche Maßnahmen gehalten werden muss. Entsprechend komplex sind die Antriebsteile derartiger Ventile und die mit einem Antriebsteil verbundenen Kupplungs-, Getriebe- und Motorkomponenten ausgestaltet.

Mit dem Stellantrieb der Erfindung wird demgegenüber ein völlig neuer Weg aufgezeigt, die Einstellung einer Öffnungsposition eines dem Stellantrieb zugeordneten Ventils bei gleichzeitigem hoher Betriebssicherheit zu ermöglichen. Ausgehend von den oben beschriebenen Nachteilen bei den bekannten Ausgestaltungen besteht die grundlegende Idee des vorgeschlagenen Stellantriebs in einer Trennung und damit Entkopplung des Einstellvorgangs einer Öffnungsposition von dem Spannvorgang der Speichereinrichtung. Der Antriebsteil ist mit der Ventilspindel Über eine in dem Spannvorgang auf eine Vorspannung vorspannbare Speichereinrichtung so gekoppelt, dass bei vorgespannter Speichereinrichtung bei der Einstellung der Öffnungsposition die vorspannung unverändert bleibt. Die Vorspannung der Speichereinrichtung sowie die Einstellung der Öffnungsposition des Ventils sind somit als unabhängige sich gegenseitig nicht beeinflussende Vorgänge konzipiert. So kann etwa die Speichereinrichtung bei vollständig geschlossenem Ventil auf eine Vorspannung vorgespannt werden, und danach eine Öffnungsposition des Ventils mittels dem der Ventilspindel zugeordneten Antriebsteil ohne weiteren Eingriff in den Speicherzustand der Speichereinrichtung vorgenommen werden.

Bei einem Spannvorgang wird die Speichereinrichtung auf eine Vorspannung vorgespannt. Hierbei wird eine entsprechende potentielle Energie in der Speichereinrichtung gespeichert. Durch das Einrastelement ist gewährleistet, dass die gespeicherte Energie erhalten bleibt und beispielsweise für einen Schnellschluss jederzeit verfügbar ist. Dabei kann das Einrastelement erforderlichenfalls in kurzer Zeit gelöst und somit die in der Speichereinrichtung gespeicherte potentielle Energie freigesetzt und für einen Schnellschluss verwendet werden. Die Hauptaufgabe des Einrastelements besteht allerdings in der Konservierung der in der Speichereinrichtung gespeicherten Energie über lange Zeit, so dass ein sicherer Betrieb bei der Einstellung der Öffnungsposition gewährleistet ist. Durch die genaue Ausgestaltung und Anordnung des Einrastelements kann überdies vorteilhafterweise der Energieinhalt in der Speichereinrichtung vorab festgelegt werden. Hierbei ist für einen Spannvorgang eine Einrastposition des Einrastelements bei einer entsprechend vorgebbaren Vorspannung zu ermitteln und konstruktiv vorzusehen.

Bei einem Spannvorgang tritt die Zunge des Einrastelements in Kontakt mit der Einrastrampe, wobei die Zunge relativ zu der Einrastrampe bewegt wird. Durch die biegsame, insbesondere federelastische, Ausgestaltung der Zunge ist ein besonders wirkungsvoller Kontakt zwischen der Zunge und der Einrastrampe herstellbar, wobei eine Kraft aufgebracht wird. Die Einrastrampe kann hierzu eine Kontaktfläche aufweisen, die relativ zu der Zunge des Einrastelements beispielsweise eine schiefe Ebene bildet. Somit gleitet bei einem Spannvorgang die Zunge entlang der schiefen Ebene aufwärts und rastet nach Beendigung des Spannvorgangs in eine Einrastposition ein, wobei ein Formschluss zwischen der Einrastrampe und der biegsamen Zunge hergestellt ist. Dabei kann vorteilhafterweise die Einrastrampe als ein Teil des Antriebsteils ausgestaltet sein, wobei bei einem Spannvorgang der die Einrastrampe aufweisende Antriebsteil gegenüber dem die Zunge aufweisenden Einrastelement bewegt wird. Nach dem Spannvorgang ist ein formschlüssiger Eingriff erreicht, wobei das Einrastelement mit der Zunge in der Einrastposition verweilt, wobei die Speichereinrichtung des Stellantriebs mit einer entsprechenden Vorspannung beaufschlagt ist. Die biegsame Zunge kann hierbei aus einem elastischen Material, beispielsweise aus einem Metall, bestehen. Bei der Einstellung der Öffnungsposition des Ventils im Anschluss an einen Spannvorgang bleibt die Vorspannung der Speichereinrichtung unverändert.

Vorteilhafterweise ist dadurch der Kraftaufwand für die Einstellung einer Öffnungsposition erheblich reduzierbar. Insbesondere ist bei einem Einstellvorgang die Einstellkraft durch die Entkopplung von dem Spannvorgang im Wesentlichen konstant. Der Antriebsteil sowie weitere dem Antriebsteil eventuell zugeordnete Antriebskomponenten, z.B. ein Getriebe und/oder ein Motor, können speziell im Hinblick auf die Anforderungen bei dem Einstellvorgang ausgelegt werden. Durch die Entkopplung von Spannvorgang und Einstellvorgang ist nämlich vorteilhafterweise erstmals eine gezielte Anpassung und Auslegung des Antriebsteils und evtl. weiterer Antriebskomponenten an den jeweiligen Vorgang erreichbar. Dies kann beispielsweise durch eine zweistufige Auslegung des Antriebsteils mit einer Leistungsstufe für den Spannvorgang und einer im allgemeinen nunmehr wesentlich geringeren Leistungsstufe für den Einstellvorgang realisiert werden.

Hierbei ist in einer bevorzugten Ausgestaltung der Erfindung bei der Einstellung der Öffnungsposition die dafür aufzubringende Stellkraft kleiner als die Vorspannung. Der Kraftaufwand bei einem Einstellvorgang ist dadurch erheblich reduziert, wodurch sich die mechanische Belastung der sich bei einem Einstellvorgang bewegenden Komponenten, z.B. Ventilspindel oder Antriebsteil entsprechend verringert. Der Verschleiß dieser Komponenten und der daran ggf. angekoppelten Komponenten ist dadurch ebenfalls deutlich geringer, wodurch sich die Lebensdauer des Stellantriebs und eines an den Stellantrieb angeschlossenen Ventils entsprechend vergrößert. Vorteilhafterweise ist durch den reduzierten Kraftaufwand bei der Einstellung einer Öffnungsposition eine entsprechend größere Anzahl von Einstellvorgängen gegenüber den bekannten Ausgestaltungen für einen Stellantrieb erzielbar.

In einer weiter bevorzugten Ausgestaltung ist unter Vorspannung der Antriebsteil mit der Speichereinrichtung so verbunden, dass der Antriebsteil mit der Speichereinrichtung bei Einstellung der Öffnungsposition gemeinsam bewegt wird. Durch diese Ausgestaltung ist vorteilhafterweise die Speichereinrichtung gemeinsam mit dem Antriebsteil bewegt. Da der Antriebsteil die Ventilspindel bei der Einstellung einer Öffnungsposition antreibt, ist somit auch die Bewegung der Ventilspindel mit der Bewegung der Speichereinrichtung synchronisiert. Vorteilhafterweise ergibt sich hierdurch eine umfassende Verfügbarkeit der Speichereinrichtung, insbesondere der in der Speichereinrichtung gespeicherten Vorspannung, in allen Phasen eines Einstellvorgangs. Im Falle eines erforderlichen Schnellschlusses des Ventils ist somit die in der Speichereinrichtung gespeicherte Vorspannung jederzeit und unmittelbar für den Schnellschluss verfügbar. Durch die Synchronisation der Bewegung bei der Einstellung einer Öffnungsposition wird die Speichereinrichtung insgesamt bewegt, wobei die Vorspannung unverändert bleibt. vorzugsweise hält das eingerastete Einrastelement mindestens etwa 50% der vorspannung. Vorteilhafterweise hält dabei das Einrastelement einen möglichst großen Anteil der Vorspannung der Speichereinrichtung. Bevorzugt hält das Einrastelement die gesamte Vorspannung der Speichereinrichtung, so dass die gesamte gespeicherte potentielle Energie in der Speichereinrichtung von dem Einrastelement gehalten und zugleich gesichert ist. Die genaue Wahl des Anteils des von der Speichereinrichtung gehaltenen Anteils an der Vorspannung ist hierbei den jeweiligen konstruktiven Gegebenheiten sowie den für den Einsatz relevanten Schnellschluss-Anforderungen anpassbar.

In einer besonders bevorzugten Ausgestaltung ist eine Freigabevorrichtung vorgesehen, welche etwa bis zu 50% der Vorspannung hält. Durch das Vorsehen einer Freigabevorrichtung ist in Kombination mit dem Einrastelement eine besonders effektive Speicherung und Freigabe der in der Speichereinrichtung gespeicherten Vorspannenergie erreicht. Hierbei wird vorteilhafterweise der wesentliche Anteil der Vorspannung von dem Einrastelement gehalten, während die Freigabeeinrichtung einen entsprechend geringeren Anteil der Vorspannung hält.

Über die Freigabeeinrichtung ist vorteilhafterweise die in der Speichereinrichtung gespeicherte potentielle Energie - beispielsweise abhängig von einem Freigabekriterium freigebbar. Die Freigabevorrichtung kann dabei als ein Teil des Einrastelements ausgestaltet oder aber unabhängig davon konzipiert sein. Mittels der Freigabevorrichtung ist daher vorteilhafterweise beispielsweise ein Schnellschluss eines mit dem Stellantrieb verbundenen Ventils auslösbar. Hierbei gibt die Freigabevorrichtung den von ihr gehaltenen Anteil an der gespeicherten Vorspannung frei, wobei die freigewordene Energie zur Auslösung eines Entspannungsvorgangs der gesamten Speichereinrichtung verwendet werden kann. Beispielsweise ist damit das Einrastelement lösbar, wobei das Einrastelement aus seiner Einrastposition herausgelöst wird. Dies kann vorteilhafterweise allein schon aufgrund der gezielten anteiligen Verteilung der zu haltenden Vorspannung auf das Einrastelement und die Freigabevorrichtung erfolgen, indem beispielsweise das Einrastelement im Hinblick auf eine vorgebbare maximal-tragbare Vorspannung ausgestaltet ist. Wird dieser Maximalwert überschritten, so wird das Einrastelement gelöst und die in der Speichereinrichtung gespeicherte Vorspannung im Wesentlichen vollständig innerhalb kurzer Zeit freigegeben.

Vorteilhafterweise ist durch die anteilige Verteilung der Vorspannung, welche durch das Einrastelement und die Freigabeeinrichtung zu halten ist, eine besonders flexible Anpassung an die jeweilige konstruktive Ausgestaltung des Einrastelements und der Freigabeeinrichtung möglich. Im Allgemeinen wird hierbei das Einrastelement den wesentlichen Anteil der Vorspannung halten, und die Freigabeeinrichtung lediglich einen geringeren Anteil zum Auslösen einer Freigabe. Von besonderem Vorteil ist hierbei, dass durch geschickte Verteilung der Anteile auf das Einrastelement und die Freigabevorrichtung ein Freigabekriterium flexibel einstellbar ist.

Vorzugsweise ist die Freigabevorrichtung elektromagnetisch, insbesondere mittels einer Spule, aktivierbar. Hierbei gibt die Freigabevorrichtung unter Änderung eines elektromagnetischen Flusses die vorspannung in der Speichereinrichtung frei. Eine Änderung eines elektromagnetischen Flusses kann dabei ein Zuschalten oder alternativ auch Abschalten eines elektromagnetischen Feldes bedeuten. Dies ist insbesondere mittels einer Spule realisierbar, die bei geschlossener Freigabevorrichtung, d. h. unter Halten der Vorspannung der Speichereinrichtung, strombehaftet oder alternativ auch stromlos betrieben werden kann. Durch eine entsprechende Änderung eines elektromagnetischen Flusses ist die Freigabevorrichtung je nach Anforderung auf unterschiedliche Weise aktivierbar.

Bevorzugt ist eine Mehrzahl von Zungen vorgesehen, die die Einrastrampe in einer Umfangsrichtung umklammern. Hierdurch ist eine Mehrfachsicherung des Einrastelements durch eine entsprechende Vielzahl von Zungen erzielbar. Die Umklammerung in einer Umfangsrichtung stellt darüber hinaus ein gleichmäßiges Einrasten und Halten der Vorspannung sicher, wobei vorteilhafterweise bei dem Einspannvorgang eine umfangsseitige Führung bei der Relativbewegung zwischen den Zungen und der Einrastrampe erreicht ist, ähnlich wie z.B. bei einer Buchse, die eine Welle führt. Ein Spannvorgang kann somit reproduzierbar und gleichmäßig unter Vermeidung von mechanischen Spannungsspitzen in einer einzelnen Zunge oder in einem Bereich der Kontaktfläche zwischen einer Zunge und der Einrastrampe erreicht werden. Die Mehrzahl von Zungen ist dabei vorteilhafterweise im Wesentlichen konzentrisch um einen eine Einrastrampe aufweisenden Antriebsteil angeordnet. Durch eine zusätzlich symmetrische Anordnung der Zungen ist eine besonders gleichmäßige Lastaufnahme und Lastverteilung bei einem Spannvorgang, insbesondere beim formschlüssigen Einrasten oder Eingriff der Zungen mit der Einrastrampe gewährleistet. Durch diese symmetrische Anordnung der Zungen ist überdies ein besonders gleichmäßiges Vorspannen der Speichereinrichtung erzielbar, wobei durch diese Art der Führung eine hohe Sicherheit gegeben ist.

In einer weiter bevorzugten Ausgestaltung ist ein teilweise von den Zungen gebildeter Klammerkorb vorgesehen, wobei der Klammerkorb den Antriebsteil umklammert. Bei einer Mehrzahl von Zungen, die beispielsweise jeweils ein als biegsamer, insbesondere federelastischer Metallstreifen oder Metall-Lamellen ausgestaltet ist, bilden diese das offene Ende des Klammerkorbs oder Lamellenkorbs. Der Klammerkorb umklammert den Antriebsteil, wobei durch die biegeelastischen Eigenschaften der Zungen eine über den vollen Umfang normal zur Kontaktfläche zwischen dem Klammerkorb dem Antriebsteil wirkende Klammerkraft auf den Antriebsteil ausgeübt wird.

Durch diese Klammerwirkung ist der Klammerkorb oder Lamellenkorb besonders vorteilhaft mit dem Antriebsteil verbunden. Sofern der Antriebsteil zugleich eine Einrastrampe aufweist, wirkt eine Klammerkraft auch bei einem Spannvorgang und insbesondere in der Einrastposition. Bei einem Spannvorgang wird der teilweise von den Zungen gebildete Klammerkorb relativ zu der Einrastrampe, insbesondere relativ zu dem Antriebsteil, bewegt, wobei zugleich eine Vorspannung auf die Speichereinrichtung aufgebracht wird.

Der Klammerkorb oder Lamellenkorb besteht dabei vorzugsweise aus einem elastischen Material, beispielsweise einem Metallblech, welches zur Herstellung der Zungen oder Lamellen entsprechend bearbeitet (z.B. gestanzt) und in Form gebracht ist.

Bevorzugt ist in dem Klammerkorb ein die Vorspannung speicherndes Federelement, insbesondere eine Tellerfeder, angeordnet. Es kann auch ein System aus Tellerfedern, z.B. ein sogenanntes Tellerfederpaket, in dem Klammerkorb oder Lamellenkorb vorgesehen sein. Mit der Anordnung eines Federelements in dem Klammerkorb ist dieses sowohl bei einem Spannvorgang als auch bei der Einstellung einer Öffnungsposition des Ventils von dem Klammerkorb eingeschlossen. Somit ist nach einem Spannvorgang auch die in dem Federelement gespeicherte Vorspannung sozusagen eingeschlossen. Der Einschluss oder die Klammerung ist dergestalt änderbar, dass bei einer Freigabe, beispielsweise mittels der oben beschriebenen Freigabevorrichtung, wie eingeschlossene Vorspannung, d. h. die in dem Federelement gespeicherte Federkraft, die Umklammerung lockert oder auch löst und sich das Federelement dadurch innerhalb kurzer Zeit entspannen kann. Die freiwerdende Federenergie wird dabei üblicherweise für einen Schnellschluss-Vorgang eines an den Stellantrieb angeschlossenen Ventils verwendet. Hierbei wird die Ventilspindel in kurzer Zeit von einer Öffnungsposition in die Schließposition mittels des sich entspannenden Federelements gebracht. Bevor eine (regulär) Einstellung einer Öffnungsposition des Ventils durchgeführt wird, ist das Federelement z.B. aus Gründen der Betriebssicherheit erneut vorzuspannen, wobei das Ventil vorzugsweise in seiner Schließposition verweilt. Nach dem Spannvorgang kann eine Einstellung einer Öffnungsposition des Ventils durch das in dem Klammerkorb eingeschlossene vorgespannte Federelement ohne jegliche Änderung der Vorspannung des Federelements erfolgen. Insbesondere ist kein Kraftaufwand gegenüber der Rückstellkraft des Federelements erforderlich, um die gewünschte Öffnungsposition der Ventilspindel zu erreichen, da der Spannvorgang von dem Einstellvorgang, d.h. dem Einstellen einer Öffnungsposition entkoppelt, ist.

Bevorzugt weist der Boden des Klammerkorbs einen Dämpferkolben auf, welcher zur Dämpfung der Bewegung der Ventilspindel, insbesondere bei einem Entspannen des Federelements, vorgesehen ist. Durch den Dämpferkolben wird eine Endlagendämpfung, z. B. bei einem Schnellschluss des Ventils, d.h. bei einer Beschleunigung der Ventilspindel von einer Öffnungsposition in die Schließposition erreicht, aber beispielsweise auch bei jeglichem Erreichen einer Endlage nach Einstellen einer Öffnungsposition.

Vorteilhafterweise ist dabei der Dämpferkolben Bestandteil des Klammerkorbs oder Lamellenkorbs, so dass hierdurch der Klammerkorb eine Doppelfunktion erfüllt, nämlich die Aufnahme des vorgespannten Federelements sowie die Eigenschaft in einem Schnellschlussfall die gewünschte Endlagendämpfung zu gewährleisten. Der Dämpferkolben kann dabei in einem dem Dämpferkolben zugeordneten Dämpfungszylinder, den man auch als Hauptdämpfungszylinder bezeichnen kann, einschiebbar und damit führbar sein, wobei der Dämpfungszylinder zur Dämpfung zusätzlich mit einer Dämpfungsflüssigkeit oder Hydraulikflüssigkeit, z.B. Öl, beaufschlagt ist.

Weitere, besonders bevorzugte, Ausgestaltungen für eine deutlich verbesserte Dämpfung sind mit den im folgenden detailliert beschriebenen Maßnahmen erreichbar:

In einer besonders bevorzugten Ausgestaltung ist in den Dämpferkolben eine hydraulische Dämpfungseinrichtung zur Entlagendämpfung integriert.

Bei der vorliegenden Konstruktion des Stellantriebs mit einem Antriebsteil, der mit der Ventilspindel über eine in einem Spannvorgang auf eine Vorspannung vorspannbare Speichereinrichtung gekoppelt ist, beispielsweise über eine elektromechanische Kupplung, ist eine quasi starre Verbindung oder Kupplung zwischen dem Antriebsteil und der Ventilspindel und einem daran sich anschließenden Ventilkegel oder Verschlussstück gegeben. Wird der Antriebsteil im Falle einer Schnellschlussauslösung von der Ventilspindel getrennt, so beschleunigt die nun frei wirkende Energie der Speichereinrichtung, beispielsweise eines vorgespannten Tellerfedersystems, die Ventilspindel mit nachgeschaltetem Ventilkegel in Schließrichtung. Dabei sind Schließgeschwindigkeiten von typischerweise 4 m/s oder darüber hinaus üblich. Im Bereich von etwa 10 bis 20 % Öffnung ist es daher günstig, eine hydraulische Dämpfung vorzusehen, die die Schließgeschwindigkeit auf beispielsweise 0,5 m/s reduziert, um ein Aufschlagen der Ventilspindel respektive des nachgeschalteten Ventilkegels in den Ventilsitz mit einer möglicherweise einhergehenden Beschädigung weitgehend auszuschließen, zu können.

Die integrierte hydraulische Dämpfungseinrichtung erweist sich hierbei als besonders vorteilhaft zur Entlagendämpfung. Diese Entlagendämpfung hebt in dem Moment, in dem die Ventilspindel mit dem Ventilkegel in den Ventilsitz aufsetzt, die starre Kopplung zwischen Ventilspindel und Federelement auf und die kinetische Energie wird erheblich reduziert. Durch die integrierte Konstruktion wird hierbei zusätzlich ein besonders kompakter Aufbau realisiert. Im Zusammenwirken mit einem Dämpfungszylinder ermöglicht der Dämpferkolben mit integrierter hydraulischer Dämpfungseinrichtung einen besonders sicheren und dauerhaften Betrieb des Stellantriebs gerade in Schnellschluss-Situationen.

In besonders bevorzugter Ausgestaltung umfasst die hydraulische Dämpfungseinrichtung einen ersten Dichtraum und einen vom ersten Dichtraum verschiedenen zweiten Dichtraum, wobei den Dichträumen in Abhängigkeit von der Öffnungsposition jeweils Hydraulikflüssigkeit, beispielsweise Ö1, zur Dämpfung zuführbar oder abführbar ist.

Dabei ist bevorzugt die Zufuhr oder Abfuhr von Hydraulikflüssigkeit im ersten Dichtraum und im zweiten Dichtraum jeweils über einen infolge einer Volumenänderung der Dichträume verursachten Differenzdruck bewirkt. Somit wird eine differenzdruckgesteuerte integrierte Dämpfungseinrichtung bereitgestellt, die je nach Öffnungsposition eine besonders angepasste Dämpfung gewährleistet. Je nachdem, ob der Druck in einem Dichtraum größer oder kleiner ist als der Umgebungsdruck, wie er beispielsweise dem Druck der Hydraulikflüssigkeit entspricht, die sich in einem von dem Dämpferkolben mit der Dämpfungseinrichtung und einen den Dämpferkolben umschließenden Dämpfungszylinder gebildeten Zwischenraum befindet, wird sich, bezogen auf den betrachteten Dichtraum, ein positiver oder negativer Differenzdruck ergeben. Hydraulikflüssigkeit wird in der Folge dementsprechend dem Dichtraum zugeführt oder aus dem Dichtraum herausgeführt, insbesondere herausgedrückt. Zum Aufbau des Differenzdrucks eine Volumenänderung des Dichtraums zu verwenden, erweist sich hierbei als besonders vorteilhaft, weil eine Volumenänderung auf relativ einfache Weise in Abhängigkeit von der jeweiligen Öffnungsposition des Stellantriebs bei einem Stellvorgang erzielt werden kann.

Zur räumlichen Separierung des ersten Dichtraums von dem zweiten Dichtraum ist vorzugsweise eine bewegliche Aktuatorplatte vorgesehen. Hierdurch sind die Dichträume räumlich voneinander getrennt, wobei beispielsweise der erste Dichtraum in Richtung der Schließposition und der zweite Dichtraum in Richtung der Öffnungsposition des Stellantriebs angeordnet ist. Die bewegliche Aktuatorplatte übernimmt vorteilhafterweise zugleich eine weitere Funktion, indem sie eine Volumenänderung eines Dichtraums vermittelt. Hierzu kann die Aktuatorplatte mittelbar oder unmittelbar mit der Ventilspindel verbunden oder an diese angekoppelt sein.

In bevorzugter Ausgestaltung grenzt zumindest an einen der Dichträume ein hydraulisches Drosselelement an. Somit ist ein Austritt von Hydraulikflüssigkeit aus dem betreffenden Dichtraum vorteilhafterweise nur oder im Wesentlichen nur über dieses Drosselelement möglich. Über den Querschnitt des Drosselelements kann dabei der zeitliche Verlauf des Austritts von Hydraulikflüssigkeit, z. B. von Öl, vorab festgelegt werden. Das aus der Drossel austretende Öl kann in einem weitgehend drucklosen Sammelraum, beispielsweise innerhalb des Gehäuses des Stellantriebs gebildet ist, aufgenommen werden.

In weiterer bevorzugter Ausgestaltung ist in einem Dichtraum ein verformbares Dichtelement angeordnet, über dessen Verformung das Volumen des Dichtraums änderbar ist. Je nach Stellvorgang und Stellsituation, insbesondere in Abhängigkeit von der Bewegungsrichtung der Ventilspindel, wird das verformbare Dichtelement verformt, und dabei z. B. gestaucht oder gestreckt. Damit wird die dem verformbaren Dichtelement zugeordnete Dichtfläche entsprechend vergrößert oder verkleinert. Diese Änderung der effektiven Dichtfläche über eine Verformung des Dichtelements wirkt sich unmittelbar auf eine Volumenänderung des betrachteten Dichtraums aus. Der Dichtraum wird dementsprechend verkleinert oder vergrößert. Im Zusammenwirken mit der beweglichen Aktuatorplatte kann somit erreicht werden, dass der jeweils andere Dichtraum sich umgekehrt wie der betrachtete Dichtraum verhält und entweder sein Volumen entsprechend vergrößert wird, d. h. in der Folge der Dichtraum aufgrund des sich aufbauenden Unterdrucks mit Hydraulikflüssigkeit gefüllt wird, oder aber das Volumen sich entsprechend verkleinert, was mit einer Abfuhr von Öl aus dem Dichtraum einhergeht. In dieser vorteilhaften Ausgestaltung ist z. B. auf beiden Seiten der Aktuatorplatte ein jeweiliges Dichtelement vorgesehen, wobei ein erstes verformbares Dichtelement dem ersten Dichtraum zugeordnet und ein zweites verformbares Dichtelement dem zweiten Dichtraum zugeordnet ist.

Vorzugsweise ist ein Stellelement, insbesondere eine Stellschraube, vorgesehen, welches unmittelbar oder mittelbar auf das Dichtelement einwirkt und zur Einstellung der Elastizität des Dichtelements dient. Das Stellelement kann dabei das verformbare Dichtelement beispielsweise vorspannen, was die elastischen Eigenschaften des Dichtelements ändert. Damit ist die erzielbare Volumenänderung in den Dichträumen und der damit bewirkte Differenzdruck einstellbar, was die Dämpfungseigenschaften der integrierten hydraulischen Dämpfungseinrichtung entsprechend beeinflusst.

Vorteilhafterweise ist der Stellantrieb durch eine Ausgestaltung für ein Ventil einer Dampfturbine gekennzeichnet. Weitere Anwendungen des Stellantriebs für Ventile in anderen Turbomaschinen, beispielsweise in einer Gasturbine sind ebenfalls möglich. Aufgrund der Anforderungen an ein für eine Beaufschlagung mit Frischdampf unter hohem Druck von bis zu 300 bar und hohen Temperaturen von bis zu 650 °C zu konzipierenden Ventils und eines entsprechenden Stellantriebs, erscheint der Stellantrieb gemäß der vorliegenden Erfindung für den Einsatz in einem Dampfturbinenventil, insbesondere für die Zustellung von Frischdampf, in besonderer Weise geeignet.

Die grundlegende Idee des erfindungsgemäßen Konzepts ist aber ohne weiteres auch auf Stellantriebe für Ventile in anderen technischen Bereichen, beispielsweise als Armatur in Anlagen der chemischen Industrie oder in ein heißes druckbeaufschlagtes Fluid führenden Pipelines anwendbar.

Die Erfindung wird anhand eines in der Zeichnung näher erläuterten Ausführungsbeispiels beschrieben. Die Zeichnung ist teilweise schematisch und nicht maßstäblich ausgeführt und umfasst der Übersichtlichkeit halber und zum Verständnis lediglich die für die Erläuterung wichtigen Komponenten eines Stellantriebs. Es zeigen hierbei:
- FIG 1 bis 4: jeweils einen Längsschnitt durch einen schematisch dargestellten Stellantrieb in verschiedenen Stellzuständen,
- FIG 5: eine Schnittansicht des in der FIG 4 dargestellten Stellantriebs entlang der Schnittlinie V-V senkrecht zur Längsachse 37,
- FIG 6: eine zu FIG 5 analoge Schnittansicht des in FIG 4 gezeigten Stellantriebs mit einer alternativen Ausgestaltung des Klammerkorbs,
- FIG 7: eine Ansicht des Details VII des in FIG 2 gezeigten Stellantriebs mit in den Dämpferkolben integrierter hydraulischer Dämpfungseinrichtung,
- FIG 8 und 9: jeweils das Detail VIII des in FIG 3 gezeigten Stellantriebs bei vorgespannter Speichereinrichtung bei Einstellung einer Öffnungsposition, mit einer integrierten hydraulischen Dämpfungseinrichtung,
- FIG 10: in einer detaillierten Ansicht gemäß Detail X der FIG 4 die integrierte hydraulische Dämpfungseinrichtung nach Auslösung eines Schnellschlusses.

Gleiche Bezugszeichen haben in den einzelnen Figuren die gleiche Bedeutung.

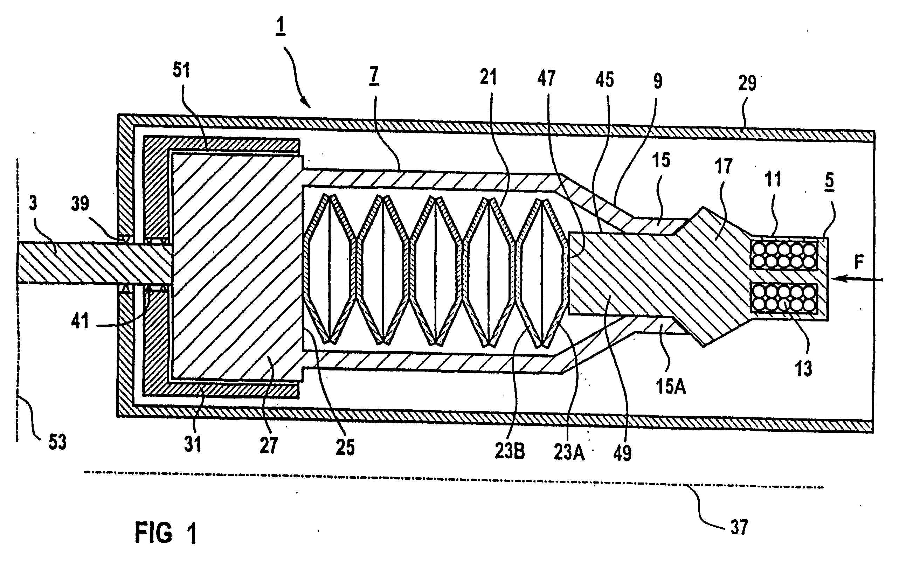

FIG 1 zeigt in einem Längsschnitt einen Stellantrieb 1 für ein Ventil, insbesondere ein Turbinenventil. Der Stellantrieb erstreckt sich entlang einer Längsachse 37 und weist entlang der Achse 37 aufeinander folgend eine Ventilspindel 3 zur Einstellung einer Öffnungsposition eines in der FIG 1 nicht näher dargestellten Ventils, eine Speichereinrichtung 7 sowie einen Antriebsteil 5 auf. Der Antriebsteil 5, die Speichereinrichtung 7 sowie die Ventilspindel 3 sind hierbei zumindest teilweise in einem Gehäuse 29 angeordnet. Die Speichereinrichtung 7 weist ein Federelement 21 auf, wobei das Federelement 21 aus einer Vielzahl von entlang der Längsachse 37 angeordneten, zueinander benachbarten Tellerfedern 23A, 23B zusammengesetzt ist. Der Antriebsteil 5 ist mit der Ventilspindel 3 über die Speichereinrichtung 7 gekoppelt. Die Kopplung der Speichereinrichtung 7 mit der Ventilspindel 3 ist über einen am Boden 25 der Speichereinrichtung 7 gebildeten Dämpferkolben 27 erreicht. Die Ventilspindel 3 ist dazu mit dem Dämpferkolben 27 verbunden. Der Dämpferkolben 27 begrenzt die Speichereinrichtung 7 in einer axialen Richtung entlang der Längsachse 37. An dem dem Dämpferkolben 27 entlang der Längsachse 37 gegenüberliegenden Ende der Speichereinrichtung 7 weist die Speichereinrichtung 7 ein Einrastelement 9 auf. Das Einrastelement 9 weist eine Zunge 15 auf, die sich entlang einer Richtung parallel zu der Längsachse 37 erstreckt. Die Zunge 15 besteht dabei aus einem biegsamen, insbesondere federelastischen Material, beispielsweise einem Metall.

An das Einrastelement 9 der Speichereinrichtung 7 grenzt entlang der Längsachse 37 der Antriebsteil 5 des Stellantriebs 1. Die Koppelung der Speichereinrichtung 7 an den Antriebsteil 5 erfolgt durch Kontakt der Zunge 15 mit einer äußeren Oberfläche 45 des Antriebsteils 5. Eine weitere Kopplung des Antriebsteils 5 mit der Speichereinrichtung 7 erfolgt durch Kontakt über eine Druckfläche 47 des Federelements 21. Die Druckfläche 47 ist dabei in Kontakt mit der äußeren Oberfläche 45 eines sich entlang der Längsachse 37 erstreckenden Stempels 49 des Antriebsteils 5. Somit kann bei Bedarf, etwa bei einem Spannvorgang, eine Kraft F in Richtung der Längsachse 37 über die Druckfläche 47 auf das Federelement 21 ausgeübt werden. Der Antriebsteil 5 weist eine Einrastrampe 17 auf, die an der äußeren Oberfläche 45 über den Umfang des Antriebsteils 5 gebildet ist. Dabei grenzen das Einrastelement 9 und die Einrastrampe 17 aneinander an, wobei entlang der Richtung der aufzubringenden Kraft F betrachtet das Einrastelement 9 in Kraftrichtung der Einrastrampe 17 nachgeordnet ist. Das Einrastelement 9 liegt mit der Zunge 15 an der äußeren Oberfläche 45 der Einrastrampe 17 an, wobei ein Formschluss erreicht ist. Der Antriebsteil 5 weist weiter eine Freigabevorrichtung 11 auf, welche eine Spule 13 umfasst. Die Spule 13 ist hierbei mit einem elektrischen Strom beaufschlagbar und in den Antriebsteil 5 integriert. Nicht integrierte Ausgestaltungen, mit einer vom Antriebsteil 5 separat angeordneten Freigabevorrichtung 11 sind ebenfalls möglich.

Entlang der Längsachse 37 grenzt an den Dämpferkolben 27 ein Dämpfungszylinder 31 an, wobei der Dämpfungszylinder 31 den Dämpferkolben 27 unter Bildung eines Spalts 51 umschließt. Der Dämpferkolben 27 ist entlang der Längsachse 37 bezüglich der Richtung einer aufzubringenden Kraft F in einer Anschlag-oder Endposition. Die mit dem Dämpferkolben 27 verbundene Ventilspindel 3 ist demzufolge in einer Schließposition 53, wobei ein an die Ventilspindel 3 angeschlossenes, in der FIG 1 nicht gezeigtes, Verschlussstück (Ventilkegel) in einem Ventilsitz eines an den Stellantrieb 1 angeschlossenen, ebenfalls nicht in der FIG 1 dargestellten, Ventils dichtend sitzt. Durch die Schließposition 53 der Ventilspindel 3 ist ein mit Hilfe des der Ventilspindel 3 zugeordneten Ventils einer Turbine zustellendes Fluid in seiner Strömung unterbrochen. Mithin wird bei geschlossenem Ventil kein Fluid, z.B. Heißdampf für eine Dampfturbine, zugestellt. In dem in der FIG 1 gezeigten Stellzustand des Stellantriebs 1 ist das Federelement 21 weitgehend entspannt. Dieser Stellzustand bei geschlossenem Ventil und entspannter Speichereinrichtung 7 kann beispielsweise nach einem erfolgten Schnellschluss des Stellantriebs 1 und des zugeordneten Ventils vorliegen.

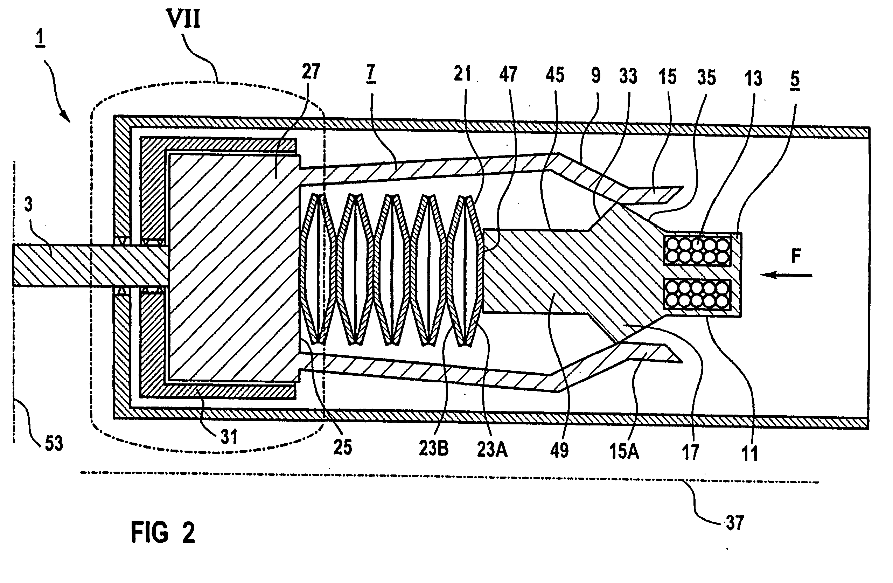

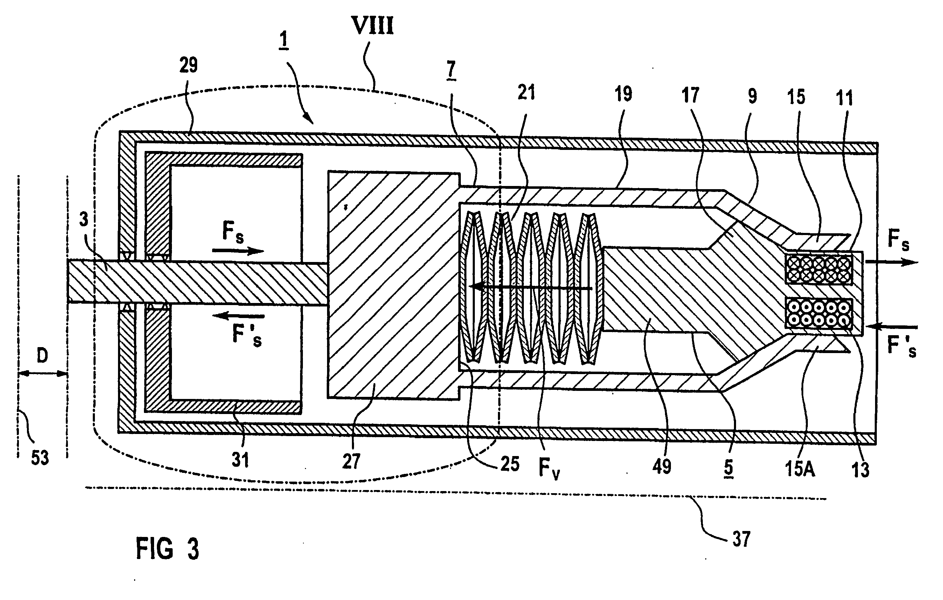

Nach einem erfolgten Schnellschluss ist zum Einstellen einer Öffnungsposition des Ventils zunächst die Speichereinrichtung 7 mit einer vorgebbaren Vorspannung vorzuspannen. Der Spannvorgang der Speichereinrichtung 7 ist in FIG 2 näher dargestellt, die den Stellantrieb 1 der FIG 1 in einem Stellzustand während eines Spannvorgangs der Speichereinrichtung 7 zeigt. In einem Spannvorgang wird eine Vorspannung auf das Federelement 21 der Speichereinrichtung 7 aufgebracht, indem eine Kraft F über den Antriebsteil 5 vermittelt auf die Druckfläche 47 des Federelements 21 ausgeübt wird. Dadurch wird das Federelement 21 oder die das Federelement 21 bildenden Tellerfedern 23A, 23B zusammengedrückt. Zugleich wird der Stempel 49 in Richtung der Kraft F parallel zu der Längsachse 37 bewegt. Mit dieser Auslenkung des Antriebsteils 5 gegenüber der ruhenden Speichereinrichtung 7 ist ein elastisches Auseinanderbiegen oder Öffnen der Zunge 15 des Einrastelements 9 verbunden, wobei die Zunge 15 bei dieser Relativbewegung in Kontakt mit der Einrastrampe 17 bleibt und bei der Linearbewegung im Wesentlichen der Kontur der Einrastrampe 17 folgt. Die Einrastrampe 17 weist eine Kontur mit einer aufsteigenden Flanke 33 sowie mit einer sich entlang der Längsachse 37 an die aufsteigende Flanke 33 anschließenden absteigenden Flanke 35. Die Oberfläche 45 bildet entlang der aufsteigenden Flanke 33 und der absteigenden Flanke 35 eine Reaktionsfläche für das Einrastelement 9, insbesondere für die biegsame, federelastische Zunge 15. Neben einer Zunge 15 kann das Einrastelement 9 auch eine weitere Zunge 15A aufweisen, wobei sowohl die Zunge 15 als auch die weitere Zunge 15A während des Spannvorgangs entlang der Einrastrampe 17 gleiten und dabei in einer Ebene senkrecht zu der Längsachse 37 auseinandergespreizt werden. Bei weiterer Ausübung einer gemäß der Federcharakteristik des Federelements 21 anwachsenden Kraft F wird der Spannvorgang solange fortgesetzt bis die Zunge 15, 15A sich allmählich wieder zusammenschließend entlang der absteigenden Flanke 35 der Einrastrampe 17 gleitet und schließlich das Einrastelement 9 einrastet, wobei dieses seine Einrastposition erreicht. Mit schlussendlichem Erreichen der Einrastposition (siehe auch FIG 3) ist der Spannvorgang abgeschlossen und die Speichereinrichtung 7 auf eine Vorspannung Fᵥ vorgespannt. Zugleich ist der Stellantrieb 1 in einem Stellzustand gebracht, der eine Betriebsbereitschaft zum Einstellen einer Öffnungsposition D eines an den Stellantrieb 1 angeschlossenen Ventils darstellt (Betriebsstellung). In der Einrastposition ist das Einrastelement 9 mit der biegsamen, federelastischen Zunge 15, 15A in einem formschlüssigen Eingriff mit der Einrastrampe 17. Das Einrastelement 9 ist somit eingerastet, wobei die Zunge 15, 15A sich an die Freigabevorrichtung 11 anschmiegt.

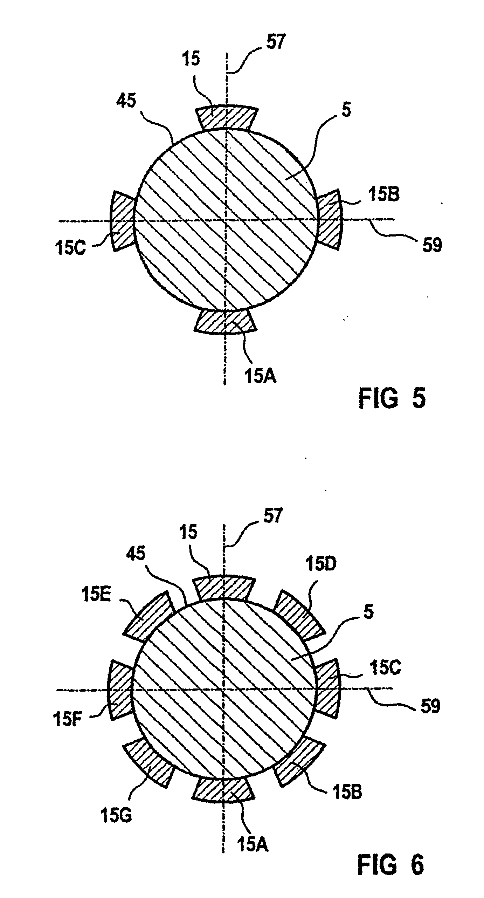

Die Funktionsweise des Stellantriebs 1 in der Betriebsstellung, d.h. bei mit einer Vorspannung Fᵥ vorgespannter Speichereinrichtung 7 ist in der FIG 3 näher erläutert. In der Betriebsstellung ist das vorgespannte Federelement 21 zwischen dem Boden 25 des Dämpferkolbens 27 und dem Stempel 49 des Antriebsteils 5 eingeschlossen. Die Freigabevorrichtung 11 ist aktiviert, indem die Magnetspule 13 von einem elektrischen Strom durchflossen wird. Bei Verwendung eines zumindest bereichsweise magnetischen Materials für die Zunge 15, 15A wird die Zunge 15, 15A von der aktivierten Magnetspule 13 angezogen und gehalten. In diesem Zustand ist die gespeicherte Federenergie 21 der Speichereinrichtung 7 eingeschlossen, wobei die Zungen 15, 15A die Einrastrampe 17 in einer Umfangsrichtung umklammern. Bei einer entsprechenden Vielzahl von Zungen 15, 15A (vgl. etwa FIG 5 und FIG 6) ist dadurch ein teilweise von den Zungen 15, 15A gebildeter Klammerkorb 19 oder Lamellenkorb 19 vorgesehen, wobei der Klammerkorb 19 den Antriebsteil 5 umklammert. In dem Klammerkorb 19 ist das die Vorspannung Fᵥ speichernde Federelement 21 angeordnet. Der Antriebsteil 5 ist mit der Ventilspindel 3 über eine in dem Spannvorgang auf die Vorspannung Fᵥ vorgespannte Speichereinrichtung 7 so gekoppelt, dass bei vorgespannter Speichereinrichtung 7 bei der Einstellung einer Öffnungsposition D die Vorspannung Fᵥ unverändert bleibt. Gegenüber der Schließposition 53 ist der in der FIG 3 gezeigte Stellantrieb 1 in einer Öffnungsposition D, wobei der Dämpferkolben 27 entlang der Längsachse 37 vollständig aus dem Dämpfungszylinder 31 heraus ausgelenkt ist. Zur Einstellung oder Änderung der Öffnungsposition D ist eine Stellkraft Fₛ, Fₛ' erforderlich, die von dem Antriebsteil 5 vermittelt und auf die Speichereinrichtung 7 und die damit verbundenen Ventilspindel 3 übertragen wird. Mit einer Stellkraft Fₛ entlang der Längsachse 37 in einer von dem Dämpfungszylinder 31 abgewandten Richtung wird eine Vergrößerung der Öffnungsposition D erreicht. Mit einer Stellkraft Fₛ' in einer entgegengesetzten Richtung zur Stellkraft Fₛ, d. h. entlang der Längsachse 37 in einer auf den Dämpfungszylinder 31 zugewandten Richtung, wird die Öffnungsposition D verkleinert. Somit kann durch Einstellung der Öffnungsposition D der Durchfluss durch ein mit dem Stellantrieb 1 betreibbares Ventil genau eingestellt werden.

Die Speichereinrichtung 7 ist dabei mit dem Antriebsteil 5 so verbunden, dass unter der Vorspannung Fᵥ der Antriebsteil 5 mit der Speichereinrichtung 7 bei Einstellung der Öffnungsposition D gemeinsam bewegt wird. Dadurch dass die Ventilspindel 3 mit dem Dämpferkolben 27 der Speichereinrichtung 7 verbunden ist, folgt die Ventilspindel 3 der durch den Antriebsteil 5 vermittelten Stellkraft Fₛ, Fₛ'. Bei der Einstellung der Öffnungsposition D ist die dafür aufzubringende Stellkraft Fₛ, Fₛ' kleiner als die Vorspannung Fᵥ. Die Einstellung einer Öffnungsposition D kann somit mit einer erheblich geringeren Stellkraft Fₛ, Fₛ' als bei herkömmlichen Stellantrieben erfolgen. Insbesondere wird mit dem erfindungsgemäßen Konzept der Spannvorgang zum Vorspannen der Speichereinrichtung 7 von dem eigentlichen Einstellen einer Öffnungsposition D getrennt, so dass Spannvorgang und Einstellvorgang unabhängig voneinander sind. Bei der Einstellung der Öffnungsposition D bleibt die Vorspannung Fᵥ der vorgespannten Speichereinrichtung 7 unverändert, wohingegen bei herkömmlichen Stellantrieben mit Federspeicher zur Einstellung einer Öffnungsposition D gegen die Rückstellkraft Arbeit verrichtet werden muss. Eine Öffnungsposition D kann hierbei auch mit der Schließposition 53 übereinstimmen, so dass dann D = 0 ist.

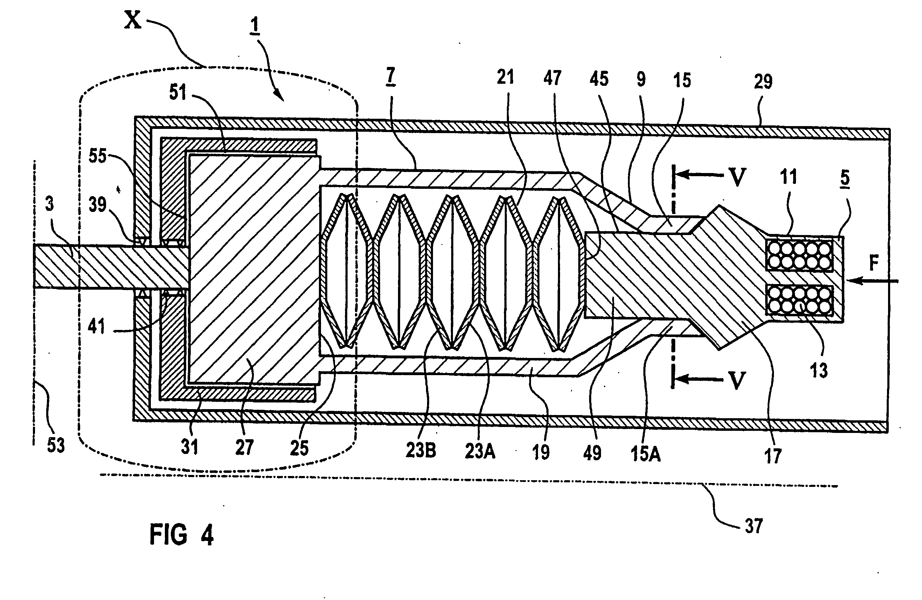

Aus Gründen der Betriebssicherheit für den Stellantrieb 1 und somit auch für ein von dem Stellantrieb 1 antreibbares Ventil, insbesondere für ein Dampfturbinenventil, ist der Antriebsteil 5 mit der Ventilspindel 3 über die in dem Spannvorgang auf eine Vorspannung Fᵥ vorgespannte Speichereinrichtung 7 gekoppelt. Die Speichereinrichtung 7 umfasst das Federelement 21, wobei das vorgenannte Federelement 21 in dem Klammerkorb 19 angeordnet ist und auf den an der Ventilspindel 3 befestigten Dämpferkolben 27 einwirkt, wobei die Vorspannung Fᵥ insbesondere auf den Boden 25 des Dämpferkolbens 27 wirkt. Der Stellantrieb 1 ist dabei derart ausgelegt, dass die Federkraft des Federelements 21 erforderlichenfalls schnelles Schließen eines von dem Stellantrieb 1 antreibbaren Ventils herbeiführen kann. Bei einem derartigen Schließvorgang wird der Dämpferkolben 27 mit der Ventilspindel 3 durch das sich entspannende Federelement 21 beschleunigt und in die Schließposition 53 gebracht. Dieser sogenannte Schnellschluss-Vorgang wird dadurch ausgelöst, dass die Freigabevorrichtung 11 den die Zunge 15, 15A freigibt. Dazu wird der Stromfluss durch die Magnetspule 13 der Freigabevorrichtung 11 abgeschaltet. Durch die Freigabe wird aufgrund der Vorspannung Fᵥ das Einrastelement 9 von der Einrastrampe 17 gelöst und zusammen mit dem gesamten Klammerkorb 19 in Richtung der Schließposition 53 beschleunigt. Bei einem Stromausfall und einer damit verbundenen Unterversorgung der Magnetspule 13 ist somit ein automatischer Selbstschluss des Stellantriebs 1 und des von diesem antreibbaren Ventils gewährleistet (vgl. FIG 4) .

In der FIG 4 ist ein Stellzustand des Stellantriebs 1 nach einem automatischen Selbstschluss dargestellt. Dieser Stellzustand entspricht im Wesentlichen wieder dem in FIG 1 gezeigten Stellzustand des Stellantriebs 1 mit entspannter Speichereinrichtung 7, insbesondere mit einem entspannten Federelement 21. Durch den Schnellschluss ist die Ventilspindel 3 in der Schließposition 53 und ein dem Stellantrieb 1 zugeordnetes, in FIG 4 nicht dargestelltes, Ventil ist geschlossen. Zur Einstellung einer Öffnungsposition D ist die Speichereinrichtung 7 zunächst erneut mit einer Vorspannung Fᵥ vorzuspannen, indem eine Kraft F parallel zu der Längsachse 37 auf den Antriebsteil 5 aufzubringen ist. Die näheren Einzelheiten für einen Spannvorgang sind bereits im Zusammenhang mit der FIG 1 ausführlich diskutiert.

Zur Verbesserung der Dämpfungseigenschaften in einem Schnellschluss kann der von dem Dämpferkolben 27 und dem Dämpfungszylinder 31 gebildete Spalt 51 zumindest teilweise mit einer Dämpfungsflüssigkeit 55 beaufschlagt sein. Die Dämpfungsflüssigkeit 55 ist hierbei beispielsweise ein Hydrauliköl, welches zugleich der Schmierung der in dem Gehäuse 29 des Stellantriebs 1 angeordneten beweglichen Komponenten dient. Zusätzlich ist die Ventilspindel 3 gegenüber dem Dämpfungszylinder 31 und dem Gehäuse 29 mittels jeweiliger Dichtelemente 41, 39 abgedichtet. Die Dichtelemente 39, 41 verhindern einen Austritt von Dämpfungsflüssigkeit 55 aus dem Spalt 51 sowie aus dem Gehäuse 29. Weiterhin bewirken die Dichtelemente 39, 41 eine Führung der Ventilspindel 3, so dass diese gleichmäßig und reproduzierbar in eine Öffnungsposition D einstellbar oder erforderlichenfalls z.B. in einem Schnellschluss in die Schließposition bringbar ist. Zur Einstellung einer Öffnungsposition D können an den Antriebsteil 5 weitere, in den Figuren nicht dargestellte, Antriebskomponenten angeschlossen sein. Dies kann beispielsweise ein Getriebe und ein das Getriebe antreibender Elektromotor sein. In diesem Falle liefert der Elektromotor das Drehmoment, welches über ein beispielsweise mehrstufiges Getriebe, z.B. ein Winkelgetriebe, den Antriebsteil 5, beispielsweise als Kugelumlaufantrieb ausgeführt, betätigt. Damit wird die Drehbewegung eines Elektromotors in eine Linearbewegung des Antriebsteils 5 umgesetzt. Durch das Vorsehen eines Elektromotors wird zusammen mit dem Stellantrieb 1 ein elektromechanischer Stellantrieb für ein Ventil bereitgestellt. Neben dem beispielhaft genannten Kugelumlaufantrieb kommen aber auch andere Antriebe, beispielsweise mit einer Kurbelscheibe oder einer Exzenterscheibe in Frage, um den Antriebsteil 5 in eine lineare Bewegung zu versetzen. Das Konzept der Erfindung ist damit sehr flexibel an unterschiedliche Getriebeformen anpassbar. Der Stellantrieb 1 ist darüber hinaus in sehr vorteilhafterweise für unterschiedliche Ventile geeignet. Er kann für Dampfturbinenventile, Gasturbinenventile oder Armaturen in industriellen Anlagen, z.B. in der chemischen Industrie, eingesetzt werden, wo ein sicherer und präziser Betrieb des Stellantriebs 1 zu gewährleisten ist.

Um alternative Ausgestaltungen des Klammerkorbs 19 zu veranschaulichen, zeigen die Figuren 5 und 6 jeweils eine Schnittansicht entlang der Schnittlinie V-V des in der Figur 4 dargestellten Stellantriebs 1. Der Schnitt ist hierbei senkrecht zu der Längsachse 37 zu verstehen, wodurch eine Schnittebene mit einer ersten Achse 57 und mit einer sich senkrecht zur ersten Achse 57 erstreckenden zweiten Achse 59 definiert ist. In Figur 5 sind vier Zungen 15, 15A, 15B, 15C vorgesehen, die den Antriebsteil 5 umklammern. Die Zungen 15, 15A sind dabei entlang der ersten Achse 57 angeordnet, während die Zungen 15C, 15B entlang der zweiten Achse 59 angeordnet sind. Hierbei liegt die Zunge 15 der Zunge 15A sowie die Zunge 15C der Zunge 15B entlang der jeweiligen Achse 57, 59 gegenüber, wobei der Antriebsteil 5 umklammert ist. Jede der Zungen 15, 15A, 15B, 15C ist dabei in Kontakt mit der äußeren Oberfläche 45 des Antriebsteils 5 und übt eine Klammerkraft oder Klemmkraft auf die äußere Oberfläche 45 aus.

Eine alternative Ausgestaltung mit einer Mehrzahl von Zungen 15, 15A, 15B, 15C, 15D, 15E, 15F, 15G, ist in der Figur 6 gezeigt. Die Zungen 15A, 15B, 15C, 15D, 15E, 15F, 15G sind dabei konzentrisch um den Antriebsteil 5 in einer Umfangsrichtung symmetrisch angeordnet. Durch die symmetrische Anordnung ist eine besonders gleichmäßige Kräfteverteilung und Lastaufnahme erzielbar, wodurch bei einem Spannvorgang das die Zungen 15, 15A, 15B, 15C, 15D, 15E, 15F, 15G aufweisende Einrastelement 9 besonders gut in Eingriff mit der Einrastrampe 17 gelangt. Darüber hinaus ist bei einem Spannvorgang der Klammerkorb 19 besonders gleichförmig in seiner Bewegung relativ zu dem Antriebsteil 5, insbesondere zu dem Stempel 49 und der Einrastrampe 17, geführt.

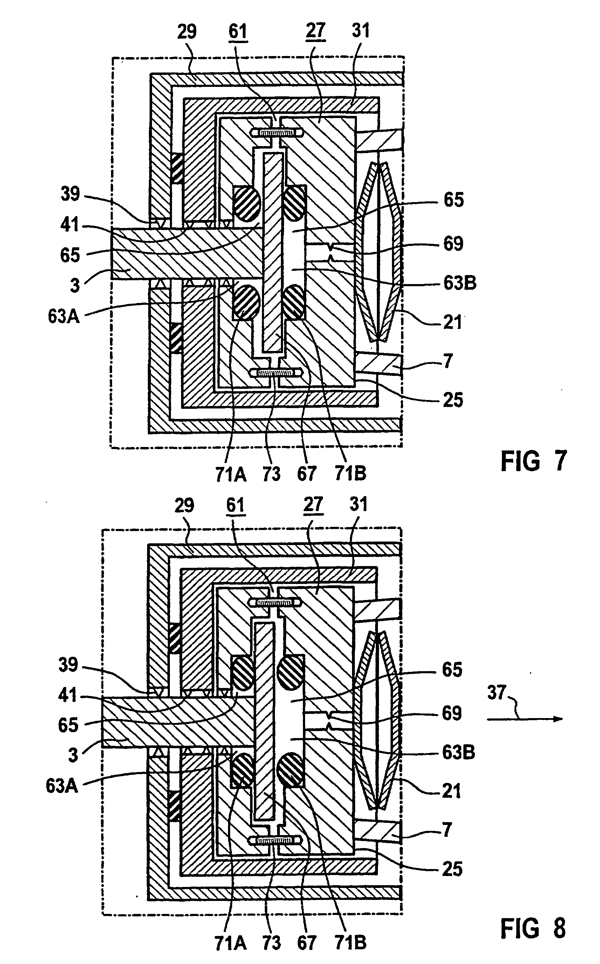

In FIG 7 ist das Detail VII der FIG 2, die einen Spannvorgang der Speichereinrichtung zeigt, näher dargestellt. In dem Spannvorgang wird eine Vorspannung auf das Federelement 21 der Speichereinrichtung 7 aufgebracht (vgl. FIG 2). Wie in der Detailansicht in FIG 7 dargestellt, ist für eine besonders wirksame Entlagendämpfung in den Dämpferkolben 27 eine hydraulische Dämpfungseinrichtung 61 integriert. Die hydraulische Dämpfungseinrichtung 61 weist einen ersten Dichtraum 63A und einen vom ersten Dichtraum 63A verschiedenen zweiten Dichtraum 63B auf. Dem ersten Dichtraum 63A und dem zweiten Dichtraum 63B ist dabei jeweils eine Hydraulikflüssigkeit 65, beispielsweise Ö1, zur Dämpfung zuführbar oder aus den Dichträumen 63A, 63B abführbar. Zur räumlichen Separierung des ersten Dichtraums 63A von dem zweiten Dichtraum 63B ist eine bewegliche Aktuatorplatte 67 vorgesehen. Diese ist mit der Ventilspindel 3 fest verbunden, so dass eine Bewegung der Ventilspindel unmittelbar zu einer Bewegung der Aktuatorplatte 67 führt. In dem ersten Dichtraum 63A ist ein Dichtelement 71A und in dem zweiten Dichtraum 63B ein Dichtelement 71B vorgesehen. Die Dichtelemente 71A, 71B sind verformbar, d. h. sie weisen gewisse elastische Eigenschaften auf, und können beispielsweise als Viton-O-Ringe realisiert sein. Bei einer Bewegung der beweglichen Aktuatorplatte 67 kann somit je nach Bewegungsrichtung ein Dichtelemnet 71A, 71B verformt werden. Durch die Verformung eines Dichtelements 71A, 71B wird eine Volumenänderung eines Dichtraums 63A, 63B herbeigeführt. Die Zufuhr oder Abfuhr von Hydraulikflüssigkeit 65 im ersten Dichtraum 63A und/oder im zweiten Dichtraum 63B wird jeweils über einen infolge der Volumenänderung in den Dichträumen 63A, 63B verursachten Differenzdruck bewirkt. Ein Differenzdruck stellt sich hierbei zwischen dem jeweils betrachteten Dichtraum 63A, 63B und einem Umgebungsdruck ein. Der Umgebungsdruck herrscht hierbei beispielsweise innerhalb des Gehäuses 29, wobei sich ein Druckgradient über die Dichtspitze 41 in den ersten Dichtraum 63A einstellt. Der zweite Dichtraum 63B wird durch ein Drosselelement 69 begrenzt, über dessen Dimensionierung, insbesondere dessen Querschnittsfläche, ein Zufluss oder Abfluss von Hydraulikflüssigkeit 65 in den zweiten Dichtraum 63B hinein oder aus dem zweiten Dichtraum 63B heraus zeitlich genau festgelegt werden kann. Die Dämpfungseinrichtung 61 weist weiterhin ein Stellelement 73 auf, welches beispielsweise in Form einer Stellschraube realisiert sein kann. Über das Stellelement 73 ist vorab eine gewisse Verformung der Dichtelemente 71A, 71B einstellbar, wodurch die Elastizität der Dichtelemente 71A, 71B und somit die Dämpfungseigenschaften beeinflusst werden. Die bewegliche Aktuatorplatte 67 ist in etwa mittig zentriert innerhalb des Dämpferkolbens 27 angeordnet und sitzt beidseitig formschlüssig zwischen den verformbaren Dichtelementen 71A, 71B.

Durch diese Ausgestaltung wird je nach linearer Bewegungsrichtung der Ventilspindel einseitig ein verformbares Dichtelement 71A, 71B verformt. Im Fall einer Stauchung des Dichtelements 71B, wie in der FIG 7 gezeigt, wird seine effektive Dichtfläche vergrößert und der erste Dichtraum 73B in seinem effektiven, der Hydraulikflüssigkeit zur Verfügung stehenden, Volumen entsprechend verkleinert. Auf der gegenüberliegenden Seite der beweglichen Aktuatorplatte 67 löst sich das Dichtelement 71A, z. B. ein Viton-O-Ring, bei dem gezeigten Stellvorgang von der Aktuatorplatte 67 ab. Der dem Dichtelement 71A zugeordnete erste Dichtraum 63A vergrößert sich entsprechend und wird aufgrund des sich einstellenden Differenzdrucks, hier ein Unterdruck im ersten Dichtraum 63A, mit Hydraulikflüssigkeit 65 gefüllt. Die Verformung der verformbaren oder elastischen Dichtelemente 71A, 71B wird durch einen Kontakt der Dichtelemente 71A, 71B mit dem Dämpferkolben 27 begrenzt. Der Dämpferkolben 27 umschließt sozusagen die integrierte Dämpfungseinrichtung 61, insbesondere die Aktuatorplatte 67 sowie die beidseitig der Aktuatorplatte 67 angeordneten, einem jeweiligen Dichtraum 63A, 63B zugeordneten, verformbaren Dichtelemente 71A, 71B.

In FIG 7 ist dabei die Stellsituation gezeigt, dass die Speichereinrichtung 7 auf eine Vorspannung Fᵥ vorgespannt ist und das Ventil in der Schließposition ist (vgl. auch Diskussion zu FIG 2). Im Allgemeinen ist bei der Anwendung in einem Dampfturbinenventil dieses konstruktiv so ausgelegt, dass der anstehende Dampfdruck das Ventil geschlossen hält.

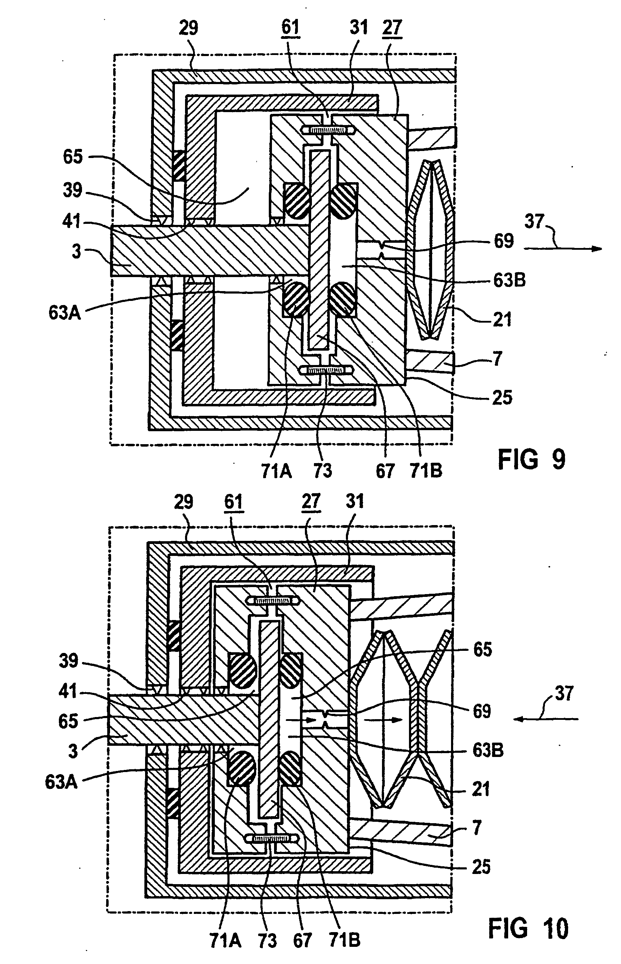

Im Vergleich dazu zeigen die Figuren 8 und 9 jeweils Situationen während eines Öffnungsvorganges des Stellantriebs 1. In Anlehnung an die FIG 3, die einen solchen Stellvorgang zeigt, zeigt FIG 8 den Beginn eines Öffnungsvorgangs des Stellantriebs 1. Der Stellantrieb 1 arbeitet hierbei gegen eine Dichtkraft, die das Ventil geschlossen hält. Dies kann beispielsweise bei Anwendung in einer Dampfturbine die durch den Dampfdruck vermittelte Dichtkraft sein, da der Dampfdruck an einem der Ventilspindel 3 zugeordneten, in der FIG 8 nicht näher dargestellten Ventilkegel, ansteht. Infolge dieser mechanischen Arbeit des Stellantriebs 1 gegen die Dichtkraft gerät der Dämpferkolben 27 in Kontakt mit dem Dichtelement 71A, welches sich im ersten Dichtraum 63A befindet. Der Dämpferkolben 27 verformt dabei das Dichtelement 71A, bis der Dämpferkolben 27 und die bewegliche Aktuatorplatte 67 in Kontakt geraten, d. h. zur Anlage kommen. Gleichzeitig wird das sich im zweiten Dichtraum 63B befindliche Dichtelement 71B entlastet und dichtet den zweiten Dichtraum 63B nicht mehr ab, da das Dichtelement 71B sich von der beweglichen Aktuatorplatte 67 löst. Dies führt zu einer Vergrößerung des Volumens des zweiten Dichtraumes 63B. Durch diese Volumenvergrö-βerung im zweiten Dichtraum 63B entsteht ein Unterdruck, d. h. ein Differenzdruck zur Umgebung, der bewirkt, dass sich der zweite Dichtraum 63B weiter mit Hydraulikflüssigkeit 65 füllt.

In FIG 9 ist ein Stellzustand des Stellantriebs 1 im Detail VIII gezeigt, wie er sich im Wesentlichen aus der in der FIG 3 gezeigten Darstellung ergibt. FIG 9 zeigt demzufolge im Detail eine Öffnungsposition eines Ventils, bei dem der Stellantrieb 1 die Ventilspindel 3 zusammen mit dem Dämpferkolben 27 in Richtung der Längsachse 37 aus dem Dämpfungszylinder 31 heraus ausgelenkt hat. Die integrierte hydraulische Dämpfungseinrichtung 61 ist demzufolge ebenso zusammen mit dem Dämpferkolben 27 entsprechend entlang der Längsachse 37 ausgelenkt. Während des Stellvorgangs, d. h. während der Auslenkung, ist die Ventilspindel 3 mit der an die Ventilspindel 3 angeschlossenen beweglichen Aktuatorplatte 67 über die verformbaren, insbesondere elastischen, Dichtelemente 71A, 71B im Wesentlichen formschlüssig gehaltert und zugleich geführt. Daneben sind weitere, als Dichtspitzen ausgestaltete Dichtelemente 39, 41 vorgesehen, über die die Ventilspindel 3 gedichtet und geführt ist. Bei einem Öffnungsvorgang, wie er in der FIG 9 dargestellt ist, ist demzufolge sowohl das in dem ersten Dichtraum 63A angeordnete Dichtelement 71A als auch das auf der gegenüberliegenden Seite der Aktuatorplatte 67 angeordnete Dichtelement 71B in dem zweiten Dichtraum 63B in einer Kontaktposition mit der Aktuatorplatte 67 und mit einer von dem Dämpferkolben 27 gebildeten Begrenzungsfläche eines Dichtraums 63A, 63B. Beide Dichtelemente 71A, 71B sind somit unter einer gewissen elastischen Spannung im jeweiligen Dichtraum 63A, 63B vorgespannt und von der Aktuatorplatte 67 und der von dem Dämpferkolben 27 gebildeten inneren Begrenzungsfläche eingeklemmt. Die Aktuatorplatte 67 ist dabei nicht in Kontakt mit dem Dämpferkolben 27, sondern ist im Wesentlichen bereits durch die verformbaren Dichtelemente 71A, 71B mittig gehaltert. Durch diese Konfiguration wird vorteilhafterweise bewirkt, dass eventuell auftretende Schwingungen, die möglicherweise beim Einsatz des Stellantriebs 1 in einer Dampfturbine von einer Dampfströmung durch das teilweise offene Ventil angeregt und auf den Stellantrieb 1, insbesondere den Dämpferkolben 27 mit der integrierten Dämpfungseinrichtung 61, übertragen werden, durch die Füllung der Dichträume 63A, 63B mit der Hydraulikflüssigkeit 65, z. B. Hydrauliköl, sowie durch die elastischen Dichtelemente 71A, 71B gedämpft werden.

FIG 10 nimmt Bezug auf das Detail X der FIG 4. Hierbei ist ein Stellzustand des Stellantriebs 1 nach einem automatischen Selbstschluss oder Schnellschluss dargestellt. Dieser Stellzustand entspricht im Wesentlichen auch wieder dem in der FIG 1 gezeigten und bereits ausführlich diskutierten Stellzustand des Stellantriebs 1 mit entspannter Speichereinrichtung 7, insbesondere mit einem entspannten Federelement 21. Durch den Schnellschluss ist die Ventilspindel 3 in der Schließposition 53 (vgl. FIG 4) und ein dem Stellantrieb 1 zugeordnetes, in den Figuren 4 und 10 nicht näher dargestelltes, Ventil geschlossen. Während des Schnellschluss wird der Dämpferkolben 27 durch die frei werdende potentielle Energie des Federelements 21 in Schließrichtung entlang der Längsachse 37 beschleunigt.

Infolge der Trägheit der dabei beschleunigten Massen, insbesondere der Massen der Ventilspindel 3 mit sich daran anschließendem, nicht näher dargestellten Ventilkegel, sowie der Aktuatorplatte 67, wird das von der Schließposition entlang der Längsachse 37 abgewandte Dichtelement 71B in dem zweiten Dichtraum 63B verformt. Die Verformung wird dabei durch ein Einklemmen des Dichtelements 71B zwischen die Aktuatorplatte 67 und einer den zweiten Dichtraum 63B begrenzenden, von dem Dämpferkolben 27 gebildeten, Begrenzungsfläche bewirkt. Demgegenüber ist in dem in der FIG 10 gezeichneten Stellzustand das Dichtelement 71A im ersten Dichtraum 63A im Wesentlichen spannungsfrei, d. h. ohne eine entsprechende Verformung. Mit der Verformung des Dichtelements 71B im zweiten Dichtraum 63B ist unmittelbar eine Verringerung des effektiven Volumens im zweiten Dichtraum 63B verbunden. Die Folge davon ist eine Verdrängung von Hydraulikflüssigkeit 65 aus dem zweiten Dichtraum 63B heraus. Die Hydraulikflüssigkeit 65 kann jedoch den zweiten Dichtraum 63B, wie über die entsprechenden Pfeile in FIG 10 näherungsweise angedeutet, nur über das hydraulische Drosselelement 69 verlassen. Hat die Ventilspindel 3 beim Schnellschluss schließlich die Schließposition 53 (vgl. FIG 4) erreicht, so bewirkt die Massenträgheit des Dämpferkolbens 27 und des Federelements 21 aufgrund ihrer Bewegungsenergie zunächst noch eine weitere Verformung des Dichtelements 71B im zweiten Dichtraum 63B. Diese Verformung nach Erreichen der Schließposition 53 durch die Ventilspindel 3 setzt sich noch so lange fort, bis der Dämpferkolben 27 und die Aktuatorplatte 67 in Kontakt kommen. Bis zu diesem Kontakt wird weiter Hydraulikflüssigkeit 65 aus dem zweiten Dichtraum 63B über das hydraulische Drosselelement 69 austreten. Die Dimensionierung des hydraulischen Drosselelements 69, insbesondere im Hinblick auf den geometrischen Querschnitt des Drosselelements 69, bestimmt dabei den zeitlichen Verlauf dieses Fluidaustritts und somit das Endlagendämpfungsverhalten der Dämpfungseinrichtung 61 in diesem Betriebszustand. Die durch das hydraulische Drosselelement 69 aus dem zweiten Dichtraum 63B austretende Hydraulikflüssigkeit 65 wird von einem im Wesentlichen drucklosen, nicht näher spezifizierbaren, Sammelraum, der beispielsweise durch das Gehäuse 29 begrenzt ist, aufgenommen. Im Falle einer Schnellschlussauslösung wird mithin durch die in den Dämpferkolben 27 integrierte Dämpfungseinrichtung 1 eine deutlich verbesserte Entlagendämpfung für den Stellantrieb 1 erreicht. Wie beschrieben, wird die Dämpfungseinrichtung insbesondere eine gezielte Reduzierung der Aufschlagenergie beim Erreichen der Schließposition 53 ermöglicht.

## Patentansprüche

1. Stellantrieb (1) für ein Ventil, insbesondere ein Turbinenventil, mit einer ventilspindel (3) zur Einstellung einer Öffnungsposition (D) des Ventils und mit einem der Ventilspindel (3) zugeordneten Antriebsteil (5), wobei
der Antriebsteil (5) mit der Ventilspindel (3) über eine in einem Spannvorgang auf eine Vorspannung (Fᵥ) vorspannbare Speichereinrichtung (7) so gekoppelt ist, dass bei vorgespannter Speichereinrichtung (7) bei der Einstellung der Öffnungsposition (D) die Vorspannung (Fᵥ) unverändert bleibt, wobei
zur Beibehaltung der Vorspannung (Fᵥ) ein Einrastelement (9) vorgesehen ist, welches beim Spannvorgang einrastet,
**dadurch gekennzeichnet, dass** das Einrastelement (9) eine biegsame, insbesondere federelastische, Zunge (15,15A,115B) zum formschlüssigen Eingriff mit einer Einrastrampe (17) aufweist.

2. Stellantrieb nach Anspruch 1,
**dadurch gekennzeichnet, dass** bei der Einstellung der Öffnungsposition (D) die dafür aufzubringende Stellkraft (Fₛ, Fₛ') kleiner ist als die Vorspannung (Fᵥ) .

3. Stellantrieb nach Anspruch 1 oder 2,
**dadurch gekennzeichnet, dass** unter Vorspannung (Fᵥ) der Antriebsteil (5) mit der Speichereinrichtung (7) so verbunden ist, dass der Antriebsteil (5) mit der Speichereinrichtung (7) bei Einstellung der Öffnungsposition (D) gemeinsam bewegt wird.

4. Stellantrieb nach Anspruch 1, 2 oder 3,
**dadurch gekennzeichnet, dass** das eingerastete Einrastelement mindestens etwa 50% der Vorspannung (Fᵥ) hält.

5. Stellantrieb nach einem der vorhergehenden Ansprüche,
**dadurch gekennzeichnet, dass** eine Freigabevorrichtung (11) vorgesehen ist, welche bis zu etwa 50% der Vorspannung (Fᵥ) hält.

6. Stellantrieb nach Anspruch 5,
**dadurch gekennzeichnet, dass** die Freigabevorrichtung (11) elektromagnetisch, insbesondere mittels einer Spule (13), aktivierbar ist.

7. Stellantrieb nach einem der vorhergehenden Ansprüche,
**dadurch gekennzeichnet, dass** eine Mehrzahl von Zungen(15,15A, ... 15G) vorgesehen ist, die die Einrastrampe (17) in einer Umfangrichtung umklammern.

8. Stellantrieb nach Anspruch 7,
**dadurch gekennzeichnet, dass** ein teilweise von den Zungen (15,15A ... 15G) gebildeter Klammerkorb (19) vorgesehen ist, wobei der Klammerkorb (19) den Antriebsteil (5) umklammert.

9. Stellantrieb nach Anspruch 8,
**dadurch gekennzeichnet, dass** indem Klammerkorb (19) ein die Vorspannung (Fᵥ) speicherndes Federelement (21), insbesondere eine Tellerfeder (23A,23B), angeordnet ist.

10. Stellantrieb nach Anspruch 9,
**dadurch gekennzeichnet, dass** der Boden (25) des Klammerkorbs (19) einen Dämpferkolben (27) aufweist, welcher zur Dämpfung der Bewegung der Ventilspindel (3), insbesondere bei einem Entspannen des Federelements (21), vorgesehen ist.

11. Stellantrieb (1) nach Anspruch 10,
**dadurch gekennzeichnet, dass** in den Dämpferkolben (27) eine hydraulische Dampfungseinrichtung (61) zur Entlagendämpfung integriert ist.

12. Stellantrieb (1) nach Anspruch 11,
**dadurch gekennzeichnet, dass** die hydraulische Dämpfungseinrichtung (61) einen ersten Dichtraum (63A) und einen vom ersten Dichtraum (63A) verschiedenen zweiten Dichtraum (63B) umfasst, wobei den Dichträumen (63A, 63B) in Abhängigkeit von der Öffnungsposition jeweils Hydraulikflüssigkeit (65), insbesondere Öl, zur Dämpfung zuführbar oder abführbar ist.

13. Stellantrieb (1) nach Anspruch 12,
**dadurch gekennzeichnet, dass** die Zufuhr oder Abfuhr von Hydraulikflüssigkeit im ersten Dichtraum (63A) und im zweiten Dichtraum (63B) jeweils über eine infolge einer Volumenänderung der Dichträume (63A, 63B) verursachten Differenzdruck bewirkt ist.

14. Stellantrieb (1) nach Anspruch 12 oder 13,
**dadurch gekennzeichnet, dass** zur räumlichen Separierung der Dichträume (63A, 63B) eine bewegliche Aktuatorplatte (67) vorgesehen ist.

15. Stellantrieb (1) nach Anspruch 12, 13 oder 14,
**dadurch gekennzeichnet, dass** zumindest an einen der Dichträume (63A, 63B) ein hydraulisches Drosselelement (69) angrenzt.

16. Stellantrieb (1) nach einem der Ansprüche 12 bis 15,
**dadurch gekennzeichnet, dass** in einem Dichtraum (63A, 63B) ein verformbares Dichtelement (71A, 71B) angeordnet ist, über dessen Verformung das Volumen des Dichtraums (71A, 71B) änderbar ist.

17. Stellantrieb (1) nach Anspruch 16,
**dadurch gekennzeichnet, dass** ein Stellelement (73), insbesondere eine Stellschraube, vorgesehen ist, die mittelbar oder unmittelbar auf das Dichtelement (71A, 71B) einwirkt und zur Einstellung der Elastizität des Dichtelements (71A, 71B) dient.

18. Stellantrieb (1) nach einem der vorhergehenden Ansprüche, **gekennzeichnet durch** eine Ausgestaltung für ein Ventil einer Dampfturbine.

## Claims

1. Actuator (1) for a valve, in particular a turbine valve, with a valve spindle (3) for setting an opening position (D) of the valve and with a drive part (5) assigned to the valve spindle (3),
the drive part (5) being coupled to the valve spindle (3) via an accumulator device (7) pretensionable to a pretension (Fᵥ) in a tensioning operation, in such a way that, with the accumulator device (7) pretensioned, the pretension (Fᵥ) remains unchanged during the setting of the opening position (D),
to maintain the pretension (Fᵥ), a latching element (9) which latches during the tensioning operation being provided, **characterized in that** the latching element (9) has a pliable, in particular resiliently elastic, tongue (15, 15A, 115B) for positive engagement with a latching ramp (17).

2. Actuator according to Claim 1, **characterized in that**, during the setting of the opening position (D), the actuating force (Fₛ, Fₛ') to be applied for this purpose is lower than the pretension (Fᵥ).

3. Actuator according to Claim 1 or 2, **characterized in that** the drive part (5) is connected, under pretension (Fᵥ), to the accumulator device (7) in such a way that the drive part (5) is moved jointly with the accumulator device (7) during the setting of the opening position (D).

4. Actuator according to Claim 1, 2 or 3, **characterized in that** the latched latching element holds at least approximately 50% of the pretension (Fᵥ).

5. Actuator according to one of the preceding claims,
**characterized in that** a release device (11) is provided, which holds up to approximately 50% of the pretension (Fᵥ).

6. Actuator according to Claim 5, **characterized in that** the release device (11) can be activated electromagnetically, in particular by means of a coil (13).

7. Actuator according to one of the preceding claims,
**characterized in that** a plurality of tongues (15, 15A,...15G) are provided, which bracket the latching ramp (17) in a circumferential direction.

8. Actuator according to Claim 7, **characterized in that** a bracket basket (19) partially formed by the tongues (15, 15A,...15G) is provided, the bracket basket (19) bracketing the drive part (5).

9. Actuator according to Claim 8, **characterized in that** a spring element (21), in particular a cup spring (23A, 23B), storing the pretension (Fᵥ) is arranged in the bracket basket (19).

10. Actuator according to Claim 9, **characterized in that** the bottom (25) of the bracket basket (19) has a damper piston (27) which is provided for damping the movement of the valve spindle (3), in particular during an expansion of the spring element (21).

11. Actuator (1) according to Claim 10, **characterized in that** a hydraulic damping device (61) for end-position damping is integrated into the damper piston (27).

12. Actuator (1) according to Claim 11, **characterized in that** the hydraulic damping device (61) comprises a first sealing space (63A) and a second sealing space (63B) different from the first sealing space (63A), in each case hydraulic fluid (65), in particular oil, for damping being capable of being supplied to or of being discharged from the sealing spaces (63A, 63B) as a function of the opening position.

13. Actuator (1) according to Claim 12, **characterized in that** the supply or discharge of hydraulic fluid in the first sealing space (63A) and in the second sealing space (63B) is brought about in each case via a differential pressure induced as a result of a change in volume of the sealing spaces (63A, 63B).

14. Actuator (1) according to Claim 12 or 13, **characterized in that** a movable actuator plate (67) is provided for the spatial separation of the sealing spaces (63A, 63B).

15. Actuator (1) according to Claim 12, 13 or 14, **characterized in that** a hydraulic throttle element (69) is adjacent to at least one of the sealing spaces (63A, 63B).

16. Actuator (1) according to one of Claims 12 to 15, **characterized in that** a sealing space (63A, 63B) has arranged in it a deformable sealing element (71A, 71B), via the deformation of which the volume of the sealing space (71A, 71B) can be changed.

17. Actuator (1) according to Claim 16, **characterized in that** a setting element (73), in particular a setscrew, is provided, which acts indirectly or directly on the sealing element (71A, 71B) and serves for setting the elasticity of the sealing element (71A, 71B).

18. Actuator (1) according to one of the preceding claims, **characterized by** a design for a valve of a steam turbine.

## Revendications

1. Actionneur (1) pour une vanne, en particulier pour une vanne de turbine, comportant une broche (3) de vanne pour régler une position (D) d'ouverture de la vanne et comprenant un élément (5) d'entraînement associé à la broche (3) de vanne,
sachant que l'élément (5) d'entraînement étant, par l'intermédiaire d'un dispositif (7) accumulateur pouvant être précontraint à une précontrainte (Fᵥ) au cours d'une opération de serrage, couplé à la broche (3) de vanne de telle sorte que, le dispositif (7) accumulateur étant précontraint, la précontrainte (Fᵥ) reste inchangée lors du réglage de la position (D) d'ouverture, et
afin de conserver la précontrainte (Fᵥ), il est prévu un élément (9) d'encliquetage qui s'enclenche lors de l'opération de serrage,
**caractérisé en ce que** l'élément (9) d'encliquetage est une languette (15, 15A, 15B) flexible, en particulier à élasticité de ressort, destinée à pénétrer à complémentarité de forme dans une rampe (17) d'encliquetage.

2. Actionneur suivant la revendication 1, **caractérisé en ce que**, lors du réglage de la position (D) d'ouverture, la force (Fₛ, Fₛ') d'actionnement à exercer à cet effet est inférieure à la précontrainte (Fᵥ).

3. Actionneur suivant la revendication 1 ou 2, **caractérisé en ce que** l'élément (5) d'entraînement est, sous précontrainte (Fᵥ), relié au dispositif (7) accumulateur de telle sorte que l'élément (5) d'entraînement est déplacé conjointement avec le dispositif (7) accumulateur lors du réglage de la position (D) d'ouverture.

4. Actionneur suivant la revendication 1, 2 ou 3, **caractérisé en ce que** l'élément d'encliquetage enclenché maintient environ 50% de la précontrainte (Fᵥ).

5. Actionneur suivant l'une des revendications précédentes, **caractérisé en ce qu'**il est prévu un dispositif (11) de libération qui maintient jusqu'à environ 50% de la précontrainte (Fᵥ).

6. Actionneur suivant la revendication 5, **caractérisé en ce que** le dispositif (11) de libération peut être activé par voie électromagnétique, en particulier au moyen d'une bobine (13).

7. Actionneur suivant l'une des revendications précédentes, **caractérisé en ce qu'**il est prévu une pluralité de languettes (15, 15A, ... 15G), qui enserrent la rampe (17) d'encliquetage dans une direction de pourtour.

8. Actionneur suivant la revendication 7, **caractérisé en ce qu'**il est prévu une cage (19) de cramponnage partiellement formée par les languettes (15, 15A, ... 15G), la cage (19) de cramponnage enserrant l'élément (5) d'entraînement.

9. Actionneur suivant la revendication 8, **caractérisé en ce qu'**un élément (21) de ressort accumulant la précontrainte (Fᵥ), en particulier une rondelle-ressort (23A, 23B), est disposé dans la cage (19) de cramponnage.

10. Actionneur suivant la revendication 9, **caractérisé en ce que** le fond (25) de la cage (19) de cramponnage comporte un piston (27) amortisseur qui est prévu pour amortir le mouvement de la broche (3) de vanne, en particulier lors d'une détente de l'élément (21) de ressort.

11. Actionneur (1) suivant la revendication 10, **caractérisé en ce qu'**un dispositif (61) d'amortissement hydraulique est intégré dans le piston (27) amortisseur pour l'amortissement de position finale.

12. Actionneur (1) suivant la revendication 11, **caractérisé en ce que** le dispositif (61) d'amortissement hydraulique comprend une première chambre (63A) d'étanchéité et une deuxième chambre (63B) d'étanchéité différente de la première chambre (63A) d'étanchéité, du liquide (65) hydraulique, en particulier de l'huile, pouvant pour l'amortissement être respectivement apporté aux chambres (63A, 63B) d'étanchéité ou en être évacué, en fonction de la position d'ouverture.

13. Actionneur (1) suivant la revendication 12, **caractérisé en ce que** l'apport ou l'évacuation de liquide hydraulique dans la première chambre (63A) d'étanchéité et dans la deuxième chambre (63B) d'étanchéité est respectivement produit au moyen d'une pression différentielle engendrée par un changement de volume des chambres (63A, 63B) d'étanchéité.

14. Actionneur (1) suivant la revendication 12 ou 13, **caractérisé en ce qu'**une plaque (67) mobile d'actionneur est prévue pour la séparation spatiale des chambres (63A, 63B) d'étanchéité.

15. Actionneur (1) suivant la revendication 12, 13 ou 14, **caractérisé en ce qu'**un élément (69) d'étranglement hydraulique est limitrophe d'au moins une des chambres (63A, 63B) d'étanchéité.

16. Actionneur (1) suivant l'une des revendications 12 à 15, **caractérisé en ce qu'**un élément (71A, 71B) d'étanchéité déformable est disposé dans une chambre (63A, 63B) d'étanchéité, via la déformation duquel le volume de la chambre (63A, 83B) d'étanchéité peut être modifié.

17. Actionneur (1) suivant la revendication 16, **caractérisé en ce qu'**il est prévu un élément (73) de réglage, en particulier une vis de réglage, qui agit indirectement ou directement sur l'élément (71A, 71B) d'étanchéité et sert à régler l'élasticité de l'élément (71A, 71B) d'étanchéité.

18. Actionneur (1) suivant l'une des revendications précédentes, **caractérisé par** un mode de réalisation pour une vanne d'une turbine à vapeur.
